# EUROPEAN PATENT SPECIFICATION

(11) **EP 2 996 291 B1**
(45) Date of publication and mention of the grant of the patent: **26.04.2017**
(21) Application number: 14811596.7
(22) Date of filing: 13.06.2014
(51) Int. Cl.: H04L 12/803, H04L 29/08

(54) **PACKET PROCESSING METHOD, DEVICE, AND SYSTEM**
PAKETVERARBEITUNGSVERFAHREN, VORRICHTUNG UND SYSTEM
PROCÉDÉ, DISPOSITIF, ET SYSTÈME DE TRAITEMENT DE PAQUETS

(30) Priority: 14.06.2013 CN 201310236338
(43) Date of publication of application: 16.03.2016
(73) Proprietor: Huawei Technologies Co., Ltd., Longgang District Shenzhen, Guangdong 518129 (CN)
(72) Inventor: ZHOU, Hong, Shenzhen Guangdong 518129 (CN); LI, Feng, Shenzhen Guangdong 518129 (CN); YIN, Yue, Shenzhen Guangdong 518129 (CN)
(74) Representative: Gill Jennings & Every LLP
(86) International application number: PCT/CN2014/079802
(87) International publication number: WO 2014/198229

(56) References cited:
- WO-A1-2008/101227
- CN-A- 1 599 351
- CN-A- 101 030 947
- CN-A- 101 599 887
- US-A1- 2012 163 180
- US-B1- 7 088 718
- US-B1- 7 315 541

## Description

### TECHNICAL FIELD

The present invention relates to communications technologies, and in particular, to a packet processing method, an apparatus and a system.

### BACKGROUND

There are various network services such as a load balancing service and a firewall service in a network. Processing of a network service is completed by a network service processing device. By using the load balancing service as an example, load is distributed in multiple computers, magnetic disk drives, or other resources by using a load balancing technology, so as to achieve objectives such as optimizing resource utilization, maximizing a throughput, and minimizing a response time. A machine providing a load balancing service capability is generally referred to as a load balancer. An important application of the load balancer is to provide load balancing for multiple servers; in this case, the load balancer is referred to as a server load balancer. For example, three servers are separately connected to a server load balancer, and the server load balancer externally provides a virtual Internet Protocol (IP) address. When a user needs to access a service provided by a server, the user needs to initiate an access request to the virtual IP address, the server load balancer selects a suitable server according to a load balancing algorithm (where the algorithm may be a polling algorithm, a least connections algorithm, a least response time algorithm or the like), and the server load balancer processes service data and then returns the service data to the user.

In an existing network service, for example, in the foregoing load balancing service, when processing the network service, a device used to process the network service, such as a load balancer, needs to use information of different network layers as a basis for processing. Specifically, a computer network is layered, and according to a layered network model proposed by the International Organization for Standardization (ISO), that is, the OSI model, a network is divided into seven layers, which are: an application layer (layer 7), a presentation layer (layer 6), a session layer (layer 5), a transport layer (layer 4), a network layer (layer 3), a data link layer (layer 2), and a physical layer (layer 1). For different network services, information of different network layers needs to be processed as a basis for processing, and even for a same network service, information of different network layers may need to be processed in different scenarios. For example, when selecting a server, a server load balancer may select the server according to information of layer 4 and layers below layer 4 that is included in a received network packet, or may select a server according to information of layers above layer 4. Generally, when the load balancer processes only information of layer 4 and layers below layer 4, the load balancer has a relatively strong processing capability and relatively high processing efficiency; while if the load balancer processes information of layers above layer 4, the load balancer has a relatively low processing capability and relatively low processing efficiency.

US patent publication 2012/163180 A1 is directed towards policy based routing for intelligent traffic management via multiple next hops.

US patent 7315541 B1 provides a method for routing a packet that includes a content request and an Internet Protocol address and port number that identify a source transmitting the packet.

US patent 7088718 B1 discloses a method of routing data from a client through one or more load-balancing nodes to a selected load-balanced server among a plurality of servers in a network.

However, currently, processing of a network service is implemented by a single network service processing device, that is, processing of information of layer 4 and layers below layer 4 and processing of information of layers above layer 4 are coupled together. For example, as described above, services of all network layers are processed in one device, that is, a load balancer; such a manner in which services of all network layers are processed by a same device reduces a service processing capability of the network service processing device such as the load balancer. For example, because processing of information of different network layers affects each other, an overall service processing capacity of the device is reduced, and the service processing capability of the device is relatively low.

### SUMMARY

Embodiments of the present invention provide a packet processing method, an apparatus and a system, to improve a service processing capability.

Various aspects are set out in the appended claims.

According to a first aspect, a packet processing method is provided, which is applied to a system including a layer 4 forwarding device, a layer 7 forwarding device, and a controller, where the layer 4 forwarding device and the layer 7 forwarding device separately communicate with the controller, and a data channel used to transmit a packet exists between the layer 4 forwarding device and the layer 7 forwarding device; and the method includes:
sending, by the controller, a first forwarding entry to the layer 4 forwarding device, where the first forwarding entry includes a first keyword and a first processing policy corresponding to the first keyword, the first keyword includes layer 4 information for matching a packet, and the first forwarding entry is used to instruct the layer 4 forwarding device to send a second packet to the layer 7 forwarding device according to the first processing policy when a first packet matching the first keyword is received; and
sending, by the controller, to the layer 7 forwarding device, a control rule used to instruct the layer 7 forwarding device in packet processing, so that the layer 7 forwarding device processes the second packet according to the control rule.

According to the first aspect, a first implementation manner is provided, where the method further includes:
sending, by the controller, a second forwarding entry to the layer 4 forwarding device, where the second forwarding entry includes a second keyword and a second processing policy corresponding to the second keyword, the second keyword includes layer 4 information for matching a packet, and the second forwarding entry is used to instruct the layer 4 forwarding device to process, when a third packet matching the second keyword is received, the third packet according to the second processing policy, and skip sending a packet to the layer 7 forwarding device.

According to the first aspect or the first implementation manner of the first aspect, a second implementation manner is provided, where after the sending, by the controller, a control rule to the layer 7 forwarding device, the method further includes:
receiving, by the controller, a packet parsing result sent by the layer 7 forwarding device, where the packet parsing result is obtained by the layer 7 forwarding device by parsing the second packet; and
sending, by the controller, a third forwarding entry to the layer 4 forwarding device according to the packet parsing result, where the third forwarding entry includes the first keyword and a third processing policy corresponding to the first keyword, and the third forwarding entry is used to instruct the layer 4 forwarding device to process, when a fourth packet matching the first keyword is received, the fourth packet according to the third processing policy, and skip sending a packet to the layer 7 forwarding device.

According to the second implementation manner of the first aspect, a third implementation manner is provided, where before the receiving, by the controller, a packet parsing result sent by the layer 7 forwarding device, the method further includes:
sending, by the controller, condition layer 7 information to the layer 7 forwarding device, where the condition layer 7 information is used to instruct the layer 7 forwarding device to send the packet parsing result when obtaining the condition layer 7 information by parsing the second packet.

According to the second implementation manner or the third implementation manner of the first aspect, a fourth implementation manner is provided, where before the sending, by the controller, a third forwarding entry to the layer 4 forwarding device, the method further includes:
receiving, by the controller, a message sent by the layer 7 forwarding device, where the message is used to instruct the controller to send the third forwarding entry to the layer 4 forwarding device.

According to a second aspect, a packet processing method is provided, which is applied to a system including a layer 4 forwarding device, a layer 7 forwarding device, and a controller, where the layer 4 forwarding device and the layer 7 forwarding device separately communicate with the controller, and a data channel used to transmit a packet exists between the layer 4 forwarding device and the layer 7 forwarding device; and the method includes:
receiving, by the layer 4 forwarding device, a first forwarding entry sent by the controller, where the first forwarding entry includes a first keyword and a first processing policy corresponding to the first keyword, the first keyword includes layer 4 information for matching a packet, and the first forwarding entry is used to instruct the layer 4 forwarding device to send a second packet to the layer 7 forwarding device according to the first processing policy when a first packet matching the first keyword is received;
receiving, by the layer 4 forwarding device, the first packet; and
sending, by the layer 4 forwarding device, the second packet to the layer 7 forwarding device through the data channel according to the first forwarding entry.

According to the second aspect, a first implementation manner is provided, where the method further includes:
receiving, by the layer 4 forwarding device, a second forwarding entry sent by the controller, where the second forwarding entry includes a second keyword and a second processing policy corresponding to the second keyword, the second keyword includes layer 4 information for matching a packet, and the second forwarding entry is used to instruct the layer 4 forwarding device to process, when a third packet matching the second keyword is received, the third packet according to the second processing policy, and skip sending a packet to the layer 7 forwarding device.

According to the first implementation manner of the second aspect, a second implementation manner is provided, where after the sending, by the layer 4 forwarding device, the second packet to the layer 7 forwarding device through the data channel, the method further includes:
receiving, by the layer 4 forwarding device, a third forwarding entry sent by the controller, where the third forwarding entry includes the first keyword and a third processing policy corresponding to the first keyword, and the third forwarding entry is used to instruct the layer 4 forwarding device to process, when a fourth packet matching the first keyword is received, the fourth packet according to the third processing policy, and skip sending a packet to the layer 7 forwarding device.

According to a fourth aspect, a controller is provided, including:
a processing unit, configured to generate a first forwarding entry, where the first forwarding entry includes a first keyword and a first processing policy corresponding to the first keyword, and the first keyword includes layer 4 information for matching a packet; and
a communications unit, configured to send the first forwarding entry to a layer 4 forwarding device, where the first forwarding entry is used to instruct the layer 4 forwarding device to send a second packet to the layer 7 forwarding device according to the first processing policy when a first packet matching the first keyword is received, where
the processing unit is further configured to generate a control rule, where the control rule is used to instruct the layer 7 forwarding device in packet processing; and
the communications unit is further configured to send the control rule to the layer 7 forwarding device, so that the layer 7 forwarding device processes the second packet according to the control rule.

According to the fourth aspect, a first implementation manner is provided, where the processing unit is further configured to generate a second forwarding entry, where the second forwarding entry includes a second keyword and a second processing policy corresponding to the second keyword, and the second keyword includes layer 4 information for matching a packet; and
the communications unit is further configured to send the second forwarding entry to the layer 4 forwarding device, where the second forwarding entry is used to instruct the layer 4 forwarding device to process, when a third packet matching the second
keyword is received, the third packet according to the second processing policy, and skip sending a packet to the layer 7 forwarding device.

According to the fourth aspect or the first implementation manner of the fourth aspect, a second implementation manner is provided, where the communications unit is further configured to receive a packet parsing result sent by the layer 7 forwarding device, where the packet parsing result is obtained by the layer 7 forwarding device by parsing the second packet;
the processing unit is further configured to generate a third forwarding entry according to the packet parsing result, where the third forwarding entry includes the first keyword and a third processing policy corresponding to the first keyword; and
the communications unit is further configured to send the third forwarding entry to the layer 4 forwarding device, where the third forwarding entry is used to instruct the layer 4 forwarding device to process, when a fourth packet matching the first keyword is received, the fourth packet according to the third processing policy, and skip sending a packet to the layer 7 forwarding device.

According to a fifth aspect, a layer 4 forwarding device is provided, including: a receiving unit and a transmitting unit, where the receiving unit is configured to receive a first forwarding entry sent by a controller, where the first forwarding entry includes a first keyword and a first processing policy corresponding to the first keyword, the first keyword includes layer 4 information for matching a packet, and the first forwarding entry is used to instruct the layer 4 forwarding device to send a second packet to a layer 7 forwarding device according to the first processing policy when a first packet matching the first keyword is received;
the receiving unit is further configured to receive the first packet; and
the transmitting unit is configured to send the second packet to the layer 7 forwarding device through a data channel according to the first forwarding entry after the receiving unit receives the first packet.

According to the fifth aspect, a first implementation manner is provided, where the receiving unit is further configured to receive a second forwarding entry sent by the controller, where the second forwarding entry includes a second keyword and a second processing policy corresponding to the second keyword, the second keyword includes layer 4 information for matching a packet, and the second forwarding entry is used to instruct the layer 4 forwarding device to process, when a third packet matching the second keyword is received, the third packet according to the second processing policy, and skip sending a packet to the layer 7 forwarding device.

In the example solutions provided a layer 4 forwarding device receives a first forwarding entry sent by a controller, parses received layer 4 information for matching a packet, matches the first forwarding entry delivered by the controller, and sends a packet to a layer 7 forwarding device. In this way, the layer 4 forwarding device processes the layer 4 information of the packet, and the layer 7 forwarding device processes layer 7 information of the packet. This helps improve a processing capability of the layer 4 forwarding device, thereby improving an overall service processing capability.

By means of the solutions provided in certain aspects, a service processing capability of a layer 7 forwarding device can be flexibly improved.

### BRIEF DESCRIPTION OF DRAWINGS

FIG. 1 is a diagram of an architecture in which a network service processing method is applied according to an embodiment of the present invention;
FIG. 2 is a schematic flowchart of an embodiment of a packet processing method according to the present invention;
FIG. 3 is a schematic flowchart of another embodiment of a packet processing method according to the present invention;
FIG. 4 is a diagram of a system applying an embodiment of a network service processing method according to the present invention;
FIG. 5 is a signaling diagram 1 of packet sending in an embodiment of a network service processing method according to the present invention;
FIG. 6 is a signaling diagram 2 of packet sending in an embodiment of a network service processing method according to the present invention;
FIG. 7 is a diagram of a system applying another embodiment of a network service processing method according to the present invention;
FIG. 8 is a signaling diagram of packet sending in another embodiment of a network service processing method according to the present invention;
FIG. 9 is a diagram of a system applying still another embodiment of a network service processing method according to the present invention;
FIG. 10 is a diagram of a system applying still another embodiment of a network service processing method according to the present invention;
FIG. 11 is a diagram of a system applying still another embodiment of a network service processing method according to the present invention;
FIG. 12 is a schematic structural diagram of an embodiment of a controller according to the present invention;
FIG. 13 is a schematic structural diagram of an embodiment of a controller according to the present invention;
FIG. 14 is a schematic structural diagram of an embodiment of a layer 4 forwarding device according to the present invention; and
FIG. 15 is a schematic structural diagram of an embodiment of a layer 4 forwarding device according to the present invention.

### DESCRIPTION OF EMBODIMENTS

There are various network services such as a load balancing service and a firewall service in a network, and information of different network layers needs to be processed when different network services are specifically processed. For example, for a network service, when the service is processed, layer 4 information needs to be processed or layer 7 information needs to be processed for a packet corresponding to the service. Herein, layer 4 or layer 7 refers to a network layer defined according to an OSI model, that is, generally, layer 7 - application layer, layer 6 - presentation layer, layer 5 - session layer, layer 4 - transport layer, layer 3 - network layer, layer 2 - data link layer, and layer 1 - physical layer.

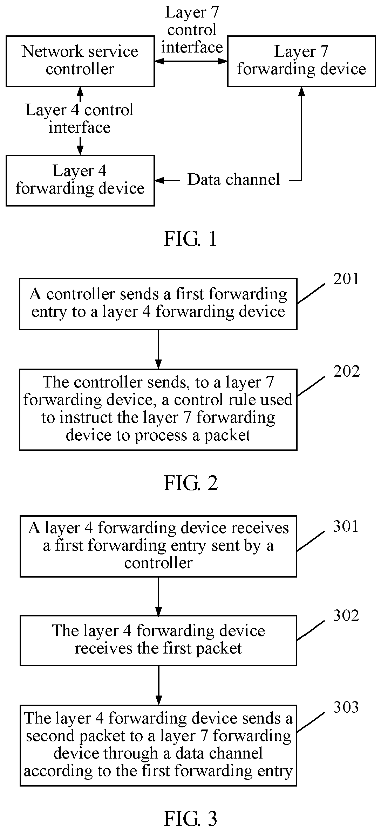

In this embodiment, a layer 4 service (a service that processes information of layer 4 and layers below layer 4) and a layer 7 service (a service that processes information of layer 7 and layers below layer 7) are decoupled, and the two types of services are not processed in a same device, but are separately processed by different devices. For example, a device processing the layer 4 service is referred to as a layer 4 forwarding device, and a device processing the layer 7 service is referred to as a layer 7 forwarding device. FIG. 1 is a diagram of an architecture in which a network service processing method is applied according to an embodiment of the present invention. As shown in FIG. 1, the architecture includes a controller, a layer 4 forwarding device, and a layer 7 forwarding device, where the layer 4 forwarding device and the layer 7 forwarding device separately communicate with the controller, the layer 4 forwarding device and the controller may be directly connected or connected by using another device, and the layer 7 forwarding device and the controller may also be directly connected or connected by using another device, which are not limited in this embodiment of the present invention.

Some network services may only need to be implemented by the controller and the layer 4 forwarding device cooperatively, and in this case, the layer 7 forwarding device is not needed; some network services may need to be implemented by the controller, the layer 4 forwarding device, and the layer 7 forwarding device cooperatively. The layer 4 forwarding device and the layer 7 forwarding device may each be configured to process a particular network layer service, for example, the layer 4 forwarding device processes a layer 4 service, and the layer 7 forwarding device processes a layer 7 service.

A layer 4 control interface may be provided between the layer 4 forwarding device and the controller, and a layer 7 control interface may be provided between the layer 7 forwarding device and the controller. A data channel used to transmit a packet may be provided between the layer 4 forwarding device and the layer 7 forwarding device, where the data channel may be an independent physical channel, or may be a channel connected between the layer 4 control interface and the layer 7 control interface. The controller can schedule and control processing of a packet between the layer 4 forwarding device and the layer 7 forwarding device.

### Embodiment 1

FIG. 2 is a schematic flowchart of an embodiment of a packet processing method according to the present invention, and the method is performed by the controller under the system architecture of FIG. 1. As shown in FIG. 2, the method may include the following processing. It should be noted that the order in which steps such as 201 and 202 in this embodiment are performed is not limited.

201. The controller sends a first forwarding entry to the layer 4 forwarding device.

For example, the controller sends a first forwarding entry to the layer 4 forwarding device by using the foregoing layer 4 control interface, where the first forwarding entry includes a first keyword and a first processing policy corresponding to the first keyword, the first keyword includes layer 4 information for matching a packet, and the first forwarding entry is used to instruct the layer 4 forwarding device to send a second packet to the layer 7 forwarding device according to the first processing policy when a first packet matching the first keyword is received.

Optionally, the controller may send the first forwarding entry to the layer 4 forwarding device by using an intermediate control device.

202. The controller sends, to the layer 7 forwarding device, a control rule used to instruct the layer 7 forwarding device in packet processing.

For example, the controller may further send, to the layer 7 forwarding device by using the layer 7 control interface, a control rule used to instruct the layer 7 forwarding device in packet processing, so that the layer 7 forwarding device processes the second packet according to the control rule. The layer 4 forwarding device may process a packet according to the first forwarding entry, and the layer 7 forwarding device may process a packet according to the control rule, where the processing action is, for example, forwarding, discarding, copying or counting, for example, forwarding a packet to a server or forwarding a packet to another forwarding device.

Further, the controller may further send a second forwarding entry to the layer 4 forwarding device, where the second forwarding entry includes a second keyword and a second processing policy corresponding to the second keyword, the second keyword includes layer 4 information for matching a packet, and the second forwarding entry is used to instruct the layer 4 forwarding device to process, when a third packet matching the second keyword is received, the third packet according to the second processing policy, and do not send a packet to the layer 7 forwarding device.

Further, after the sending, by the controller, a control rule to the layer 7 forwarding device, the method further includes: receiving, by the controller, a packet parsing result sent by the layer 7 forwarding device, where the packet parsing result is obtained by the layer 7 forwarding device by parsing the second packet; and sending, by the controller, a third forwarding entry to the layer 4 forwarding device according to the packet parsing result, where the third forwarding entry includes the first keyword and a third processing policy corresponding to the first keyword, and the third forwarding entry is used to instruct the layer 4 forwarding device to process, when a fourth packet matching the first keyword is received, the fourth packet according to the third processing policy, and do not send a packet to the layer 7 forwarding device.

As described above, in this embodiment of the present invention, a layer 4 forwarding device and a layer 7 forwarding device are separately disposed, and a controller used to control the two devices to process a packet is further disposed. These devices may work in such a cooperative manner that a packet first reaches the layer 4 forwarding device, the layer 4 forwarding device may forward the packet to the layer 7 forwarding device, and the layer 7 forwarding device parses the packet to obtain a packet parsing result. For example, the packet parsing result may be layer 4 information, layer 7 protocol information or the like that is included in the packet. The layer 7 forwarding device may further acquire service statistics information, where the service statistics information is mainly used to represent service processing load, such as a service volume or CPU load, of the layer 7 forwarding device. The layer 7 forwarding device may report the service statistics information and/or the packet parsing result to the controller, so that the controller can separately perform service control on the layer 4 forwarding device and/or the layer 7 forwarding device according to these pieces of information.

For example, if the controller determines, according to the packet parsing result, that subsequently the layer 7 forwarding device no longer needs to participate in processing of the packet, that is, only needs to be processed by the layer 4 forwarding device, the controller may send a third forwarding entry to the layer 4 forwarding device, where the third forwarding entry is used to instruct the layer 4 forwarding device to process, when a fourth packet matching the first keyword is received, the fourth packet according to the third processing policy, and do not send a packet to the layer 7 forwarding device.

Further, before the receiving, by the controller, a packet parsing result sent by the layer 7 forwarding device, the method further includes: sending, by the controller, condition layer 7 information to the layer 7 forwarding device, where the condition layer 7 information is used to instruct the layer 7 forwarding device to send the packet parsing result when obtaining the condition layer 7 information by parsing the second packet.

Optionally, before the sending, by the controller, a third forwarding entry to the layer 4 forwarding device, the method further includes: receiving, by the controller, a message sent by the layer 7 forwarding device, where the message is used to instruct the controller to send the third forwarding entry to the layer 4 forwarding device.

Optionally, the sending, by the controller, a control rule to the layer 7 forwarding device includes: sending, by the controller, a fifth processing policy or a fourth forwarding entry to the layer 7 forwarding device, where the fourth forwarding entry includes: a fourth keyword and a fourth processing policy corresponding to the fourth keyword.

Optionally, the sending, by the controller, a fifth processing policy or a fourth forwarding entry to the layer 7 forwarding device includes: sending, by the controller, the fifth processing policy or the fourth forwarding entry to the layer 7 forwarding device after receiving the packet parsing result sent by the layer 7 forwarding device.

In the prior art, network services of various layers are all processed by a same device, for example, a device processes both a layer 4 service and a layer 7 service, and when layer 7 information needs to be processed, efficiency of processing the layer 7 service is relatively slow, which reduces efficiency of processing the layer 4 service. In this embodiment of the present invention, a layer 4 forwarding device is separately disposed, and a controller is further disposed. The layer 4 forwarding device receives a first forwarding entry sent by the controller, parses received layer 4 information for matching a packet, matches the first forwarding entry delivered by the controller, and sends a packet to the layer 7 forwarding device. In this way, the layer 4 forwarding device processes the layer 4 information of the packet, and the layer 7 forwarding device process layer 7 information of the packet. The layer 4 forwarding device is specially used for processing the layer 4 service, so that both a service processing capacity and processing efficiency are improved, and service arrangement is quite flexible.

In addition, the system architecture of this embodiment of the present invention may include forwarding devices respectively for processing different services. For example, the layer 4 forwarding device provides a firewall service, and the layer 7 forwarding device provides a load balancing service.

In this embodiment, the layer 4 service and the layer 7 service are separately processed by different devices. In this way, the layer 4 forwarding device is specially used for processing the layer 4 service, thereby improving the service processing efficiency; and the layer 7 forwarding device is used only when a service of a layer above layer 4 needs to be processed, thereby achieving relatively high flexibility.

### Embodiment 2

FIG. 3 is a schematic flowchart of another embodiment of a packet processing method according to the present invention, and the method is performed by the layer 4 forwarding device under the system architecture of FIG. 1. As shown in FIG. 3, the method may include the following processing. It should be noted that the order in which steps in this embodiment are performed is not limited. Moreover, because the method is similar to that of Embodiment 1, the method is briefly described in this embodiment.

301. The layer 4 forwarding device receives a first forwarding entry sent by the controller.

The first forwarding entry includes a first keyword and a first processing policy corresponding to the first keyword, the first keyword includes layer 4 information for matching a packet, and the first forwarding entry is used to instruct the layer 4 forwarding device to send a second packet to the layer 7 forwarding device according to the first processing policy when a first packet matching the first keyword is received.

302. The layer 4 forwarding device receives the first packet.

303. The layer 4 forwarding device sends the second packet to the layer 7 forwarding device through the data channel according to the first forwarding entry.

Further, the layer 4 forwarding device may further receive a second forwarding entry sent by the controller, where the second forwarding entry includes a second keyword and a second processing policy corresponding to the second keyword, the second keyword includes layer 4 information for matching a packet, and the second forwarding entry is used to instruct the layer 4 forwarding device to process, when a third packet matching the second keyword is received, the third packet according to the second processing policy, and do not send a packet to the layer 7 forwarding device.

Further, after the sending, by the layer 4 forwarding device, the second packet to the layer 7 forwarding device through the data channel, the method further includes: receiving, by the layer 4 forwarding device, a third forwarding entry sent by the controller, where the third forwarding entry includes the first keyword and a third processing policy corresponding to the first keyword, and the third forwarding entry is used to instruct the layer 4 forwarding device to process, when a fourth packet matching the first keyword is received, the fourth packet according to the third processing policy, and do not send a packet to the layer 7 forwarding device.

The following describes the method of this embodiment of the present invention with reference to several specific network services:

### Embodiment 3

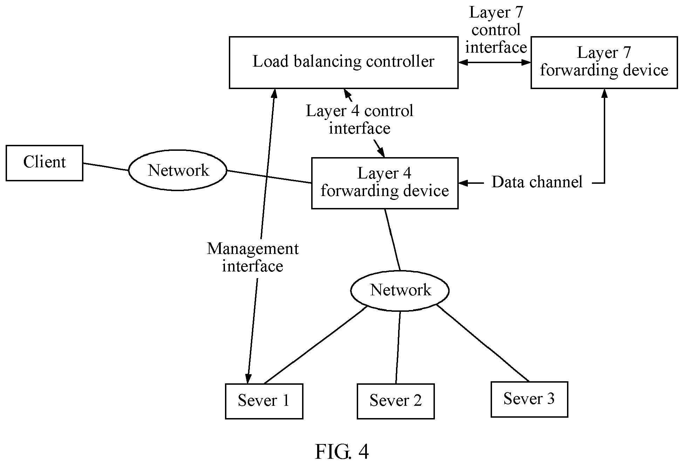

In this embodiment, a load balancing service is used as an example, and a controller for processing the load balancing service may be referred to as a load balancing controller. Referring to FIG. 4, FIG. 4 is a diagram of a system applying an embodiment of a network service processing method according to the present invention. In this embodiment, it is assumed that there are a layer 4 forwarding device and a layer 7 forwarding device (certainly, the layer 7 forwarding device is used when being needed, and may not be used or may not be disposed when not being needed).

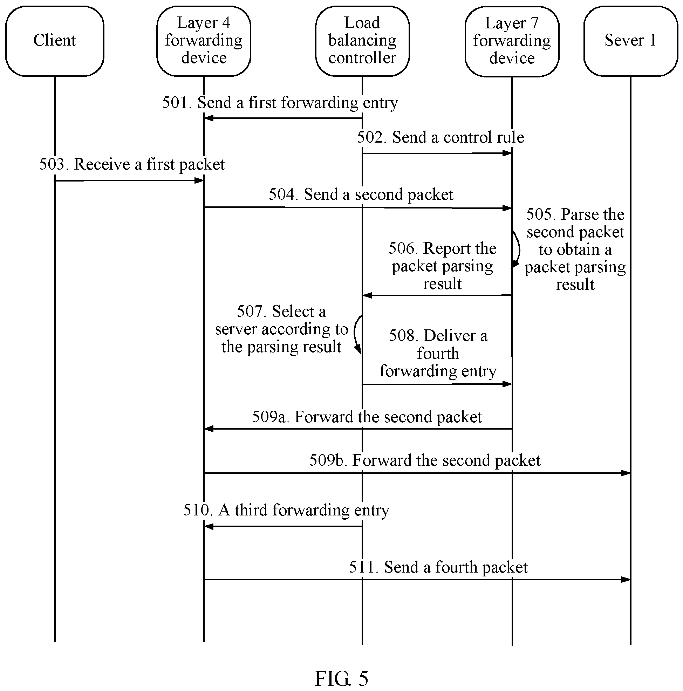

Exemplarily, in this embodiment, three servers and one client are included, where the three servers are, for example, server 1, server 2, and server 3, the client may send a packet to one of the three servers, and the load balancing controller and the shown forwarding devices jointly implement control of load balancing. The server may also send a packet to the client, and the load balancing controller and the shown forwarding devices jointly implement packet forwarding. FIG. 5 is a signaling diagram 1 of packet sending in an embodiment of a network service processing method according to the present invention. FIG. 5 shows an example in which a client sends a packet to a server, including:
501. A load balancing controller sends a first forwarding entry to a layer 4 forwarding device.

The load balancing controller generates the first forwarding entry. For example, information such as server load, and a link status between a server and a forwarding device may be acquired according to server information, a load balancing algorithm, and the like, and synthesized into the first forwarding entry. The information such as server load may be acquired by using a management interface that is provided between the load balancing controller and the server. There are multiple manners for communication between the load balancing controller and the server, such as a network address translation (NAT) manner, a tunneling manner, or a direct routing manner. The information such as server load may also be acquired by the load balancing controller by instructing the layer 4 forwarding device directly connected to the server to collect and report the information to the load balancing controller.

The first forwarding entry sent by the load balancing controller to the layer 4 forwarding device includes a first keyword and a first processing policy corresponding to the first keyword, and the first keyword includes layer 4 information for matching a packet. The layer 4 information is, for example, at least one of a source IP address, a destination IP address, a source port, a destination port, a source MAC address, a destination MAC address, a protocol number, and a VLAN ID. The first forwarding entry is used to instruct the layer 4 forwarding device to send a second packet to the layer 7 forwarding device according to the first processing policy when a first packet matching the first keyword is received; the first forwarding entry may be in a form of a flow entry. For example, the flow entry includes: forwarding a packet conforming to layer 4 information 1 to server 1 (where the layer 4 information 1 may be referred to as the first keyword, and the forwarding to server 1 is a packet processing policy corresponding to the layer 4 information 1); forwarding a packet conforming to layer 4 information 2 to server 2; and forwarding a packet conforming to layer 4 information 3 to server 3. Further, the flow entry may further include: forwarding a packet conforming to layer 4 information 4 to the layer 7 forwarding device.

Optionally, the load balancing controller may deliver the flow entry by using the open flow protocol, or may deliver the flow entry by using an extension of a protocol such as the Hypertext Transfer Protocol (HTTP) or the Extensible Messaging and Presence Protocol (XMPP).

502. The load balancing controller sends a control rule to a layer 7 forwarding device, where the control rule is used to instruct the layer 7 forwarding device in packet processing.

The control rule sent by the load balancing controller to the layer 7 forwarding device is specifically, for example, a fifth processing policy or a fourth forwarding entry, where the fourth forwarding entry may include a fourth keyword and a fourth processing policy corresponding to the fourth keyword, and the fourth keyword may include layer 7 information for matching a packet. The fourth forwarding entry may be in a form of a flow entry, for example, including: forwarding a packet conforming to layer 7 information 1 to server 1 (where the layer 7 information 1 may be referred to as the fourth keyword, the forwarding to server 1 is the fourth processing policy corresponding to the layer 7 information 1); forwarding a packet conforming to layer 7 information 2 to server 2; and forwarding a packet conforming to layer 7 information 3 to server 3. Herein, the layer 7 information includes information of layer 7 and layers below layer 7.

Optionally, the layer 4 forwarding device may generally be implemented by high-performance forwarding hardware, such as a switch or a router, and it is relatively convenient for such a device to implement packet forwarding according to a forwarding table delivered in advance, such as a flow entry. The layer 7 forwarding device generally performs identification and parsing for a needed protocol layer according to a requirement of a network service, and extracts and processes key information and the like, and such a device can be controlled in a more flexible manner. For example, a control rule may be delivered to the layer 7 forwarding device, and the time at which and the manner in which the control rule is sent are also more flexible.

For example, for the time at which the load balancing controller sends the control rule to the layer 7 forwarding device, the control rule may be sent to the layer 7 forwarding device before the layer 7 forwarding device receives a packet; for example, before forwarding a packet to the layer 7 forwarding device, the layer 4 forwarding device sends the foregoing flow entry including "forwarding a packet confirming to layer 7 information 1 to server 1 ", so that when receiving the packet, the layer 7 forwarding device parses the packet and processes the packet based on the control rule and according to layer 7 information obtained through parsing. Alternatively, the layer 7 forwarding device may first receive a packet, and after obtaining a packet parsing result by parsing the packet, send the packet parsing result to the load balancing controller; after receiving the result, the load balancing controller determines a control rule according to the packet parsing result and delivers the control rule to the layer 7 forwarding device, that is, sends the fifth processing policy or the fourth forwarding entry to the layer 7 forwarding device.

Optionally, if the latter manner is used, that is, the load balancing controller delivers the control rule after receiving the packet parsing result, the load balancing controller may send an information reporting condition to the layer 7 forwarding device in advance, where the information reporting condition includes: condition layer 7 information obtained by parsing a packet, the condition layer 7 information herein refers to layer 7 information used as a reporting condition for reporting the packet parsing result to the load balancing controller, and the condition layer 7 information is used to instruct the layer 7 forwarding device to send the packet parsing result when obtaining the condition layer 7 information by parsing the second packet. That is, when layer 7 information obtained by parsing a packet is the condition layer 7 information, the packet parsing result is reported to the load balancing controller. For example, the condition layer 7 information may include: for a packet conforming to layer 7 information 4, further requesting the load balancing controller. In this case, the layer 7 information 4 is equivalent to the condition layer 7 information, and is a condition for the layer 7 forwarding device to request the load balancing controller to deliver a forwarding table.

As described above, the control rule sent by the load balancing controller to the layer 7 forwarding device may be a fifth processing policy or a fourth forwarding entry, where the fourth forwarding entry is a forwarding policy that has been determined by the load balancing controller, for example, sending a packet conforming to the layer 7 information 1 to server 1. The fourth forwarding entry is obtained by the load balancing controller according to a load balancing algorithm, server information, and the like, and may be delivered to the layer 7 forwarding device, for example, in a form of a flow entry, and the layer 7 forwarding device processes the received packet according to the fourth forwarding entry. The fifth processing policy refers to that the load balancing controller informs the layer 7 forwarding device of the information such as the load balancing algorithm based on which the fourth forwarding entry is obtained, for example, "according to a load balancing algorithm a, when load of a server is less than b, forwarding a packet to the server", and the layer 7 forwarding device determines, according to the fifth processing policy delivered by the load balancing controller, a server to which the received packet should be forwarded. In this embodiment, the fourth forwarding entry is used as an example.

503. The layer 4 forwarding device receives a first packet sent by a client.

It can be seen from FIG. 4 that a packet sent by the client is directly sent to the layer 4 forwarding device.

504. The layer 4 forwarding device sends a second packet to the layer 7 forwarding device according to the first packet and the first forwarding entry.

After receiving the first packet, the layer 4 forwarding device performs packet forwarding according to the first forwarding entry received in 501. For example, if layer 4 information obtained by parsing a packet is the layer 4 information 1, the packet is forwarded to server 1; if layer 4 information obtained by parsing a packet is the layer 4 information 2, the packet is forwarded to server 2, and so on. In this embodiment, assuming that layer 4 information obtained by parsing a packet is layer 4 information 4, the layer 4 forwarding device accordingly sends a second packet to the layer 7 forwarding device. The second packet may be, for example, a packet obtained by the layer 4 forwarding device by copying the first packet.

505. The layer 7 forwarding device parses the second packet to obtain a packet parsing result.

After receiving the second packet sent by the layer 4 forwarding device, the layer 7 forwarding device buffers and parses the packet. The packet parsing result includes, for example, layer 7 information 4, where the layer 7 information 4 may include: layer 4 information 4 (for example, network quintuple information); and layer 7 protocol information, such as HTTP Cookie header information, or a Session Initiation Protocol (SIP for) Call_ID (call identifier). The layer 7 forwarding device queries, according to the parsing result, the flow entry received in 502, and according to "for a packet conforming to layer 7 information 4, further requesting the load balancing controller" in the flow entry, the layer 7 forwarding device needs to report the packet parsing result to the load balancing controller

506. The layer 7 forwarding device reports the packet parsing result to the load balancing controller.

The layer 7 forwarding device may report the packet parsing result to the load balancing controller, to request the load balancing controller for a processing policy of a next step.

For example, a format and content of the foregoing information sent by the layer 7 forwarding device may be related to a particular network service, and by using a layer 7 load balancing service as an example, may include {network quintuple information, a server expected to be selected, layer 7 protocol information (for example, HTTP Cookie header information, or SIP Call_ID header information)}.

507. The load balancing controller selects a server according to the parsing result.

The load balancing controller selects a suitable server according to the packet parsing result reported by the layer 7 forwarding device. In this embodiment, it is assumed that the selected server is server 1. Certainly, the load balancing controller may also select a server by additionally considering other information, for example, according to the packet parsing result and information such as a server status.

508. The load balancing controller delivers a fourth forwarding entry to the layer 7 forwarding device.

After selecting a server in 507, the load balancing controller may generate a fourth forwarding entry and deliver the fourth forwarding entry to the layer 7 forwarding device, where the fourth forwarding entry may include: forwarding a packet conforming to layer 7 information 4 to server 1.

For example, a basic format of the delivered fourth forwarding entry may be {a serial number, a status (for example, whether enabled or not), a priority, and particular flow entry content of a layer 7 network service}. A format and content of the specified flow entry content of the layer 7 network service may be related to a particular service, and by using a layer 7 load balancing service as an example, may include {server information, an action (for example, forwarding a packet of the flow, sending a packet to a controller, reporting service statistics information, or the like)}.

509. The layer 7 forwarding device forwards the second packet to server 1 according to the fourth forwarding entry.

The forwarding of the second packet by the layer 7 forwarding device to server 1 may be completed by using the layer 4 forwarding device as a relay. Specifically, the second packet may be forwarded through a data channel between the layer 7 forwarding device and the layer 4 forwarding device, and then sent to server 1 by using the layer 4 forwarding device. FIG. 5 shows a packet forwarding path formed by 509a and 509b.

Further, in 507, the load balancing controller may also determine, according to the packet parsing result, that subsequently the layer 7 forwarding device no longer needs to process the packet, that is, next time the layer 4 forwarding device receives the packet, the layer 7 forwarding device no longer needs to participate in processing. Therefore, in this case, the load balancing controller may further perform 510; step 510 may be performed after 507, and the time order of 510, and 508 and 509 is not limited.

510. The load balancing controller sends a third forwarding entry to the layer 4 forwarding device.

The load balancing controller directly sends a third forwarding entry to the layer 4 forwarding device, where the third forwarding entry includes the first keyword and a third processing policy corresponding to the first keyword, and the third forwarding entry is used to instruct the layer 4 forwarding device to process, when a fourth packet matching the first keyword is received, the fourth packet according to the third processing policy, and do not send a packet to the layer 7 forwarding device. For example, in step 504, the layer 4 forwarding device forwards, according to "forwarding a packet conforming to layer 4 information 4 to the layer 7 forwarding device" in the flow entry, the packet to the layer 7 forwarding device; in this case, the sent flow entry may include "forwarding a packet conforming to layer 4 information 4 to server 1". In this way, next time the layer 4 forwarding device receives a first packet sent by the client in 503, the layer 4 forwarding device directly performs 511.

511. The layer 4 forwarding device sends a received fourth packet matching a first keyword to server 1.

In this case, the layer 4 forwarding device no longer sends a packet to the layer 7 forwarding device, but directly sends a received fourth packet matching the first keyword to server 1.

In addition, even if the load balancing controller sends the fourth forwarding entry to the layer 4 forwarding device, and subsequently the layer 7 forwarding device does not need to participate in processing, the load balancing controller still needs to perform 508, and inform the layer 7 forwarding device that the layer 7 forwarding device still needs to complete packet forwarding processing this time; and the layer 4 forwarding device also no longer forwards a packet to the layer 7 forwarding device next time, and the layer 7 forwarding device also no longer participates in processing.

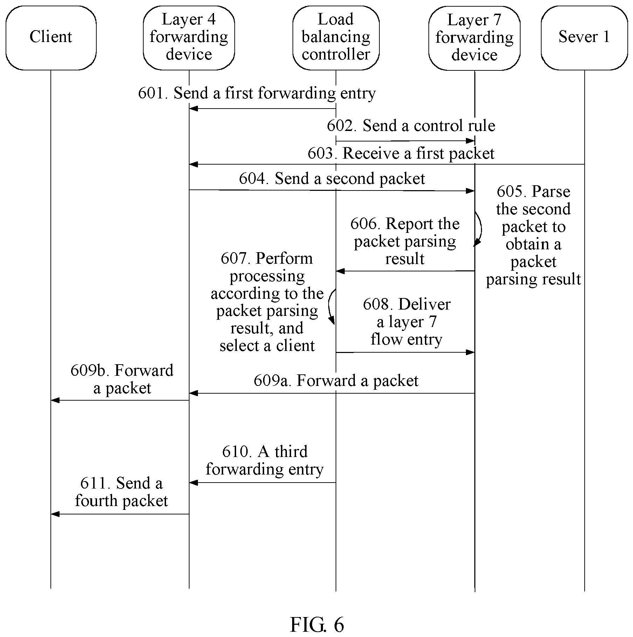

The foregoing example of FIG. 5 is an example in which a client sends a packet to a server. In the following, FIG. 6 shows an example in which a server sends a packet to a client, and it is assumed that in some cases (for example, HTTP layer 7 session persistence requires extracting Cookie information in a response message of the server), the packet sent by the server to the client needs to be processed by a layer 7 forwarding device. FIG. 6 is a signaling diagram 2 of packet sending in an embodiment of a network service processing method according to the present invention, and the method may include:
601. A load balancing controller sends a first forwarding entry to a layer 4 forwarding device.

The first forwarding table may include a first keyword and a first processing policy corresponding to the first keyword, where the first keyword includes layer 4 information for matching a packet, and the layer 4 information is, for example, at least one of a source IP address, a destination IP address, a source port, a destination port, a source MAC address, a destination MAC address, a protocol number, and a VLAN ID.

In this embodiment, the first forwarding entry may be in a form of a flow entry. For example, the flow entry includes: forwarding a packet conforming to layer 4 information 5 to a layer 7 forwarding device. The layer 4 information 5 may be referred to as the first keyword, and the forwarding to a layer 7 forwarding device may be referred to as the first processing policy corresponding to the first keyword.

602. The load balancing controller sends a control rule to a layer 7 forwarding device, where the control rule is used to instruct the layer 7 forwarding device in packet processing.

For example, the control rule may also be sent in a form of a forwarding table, and for example, may be a fourth forwarding entry, where the fourth forwarding entry includes a fourth keyword and a fourth processing policy corresponding to the fourth keyword, and the fourth keyword may include layer 7 information for matching a packet.

The fourth forwarding entry may also be in a form of a flow entry. For example, the flow entry may include: for a packet conforming to layer 7 information 5, further requesting the load balancing controller. The layer 7 information 5 is condition layer 7 information, and when layer 7 information obtained by the layer 7 forwarding device by parsing a packet meets the condition layer 7 information, the layer 7 forwarding device requests the load balancing controller to instruct how to further process the packet.

603. The layer 4 forwarding device receives a first packet sent by server 1.

604. The layer 4 forwarding device sends a second packet to the layer 7 forwarding device according to the first packet and the first forwarding entry.

For example, in this embodiment, it is assumed that the layer 4 forwarding device obtains layer 4 information 5 by parsing a packet, and therefore, the layer 4 forwarding device sends a second packet to the layer 7 forwarding device according to the first processing policy in the first forwarding entry. For example, the second packet may be obtained by the layer 4 forwarding device by copying the first packet.

605. The layer 7 forwarding device parses the second packet to obtain a packet parsing result.

In this embodiment, it is assumed that the layer 7 forwarding device parses the second packet, and the obtained packet parsing result is layer 7 information 5.

606. The layer 7 forwarding device reports the packet parsing result to the load balancing controller.

The layer 7 forwarding device learns, according to the flow entry delivered by the controller that is received in 602, that when obtaining layer 7 information 5 by parsing, the layer 7 forwarding device needs to request the load balancing controller for how to process the packet; accordingly, the layer 7 forwarding device reports the packet parsing result to the load balancing controller.

607. The load balancing controller performs corresponding processing according to the packet parsing result, and selects a client.

The load balancing controller performs corresponding processing according to the received packet parsing result. For example, for HTTP layer 7 session persistence, the processing performed by the controller may be establishing an association between server 1 and Cookie information. Moreover, the load balancing controller further determines which client the packet is to be sent to in a next step. In this embodiment, it is assumed that there is only one client. Optionally, there may also be multiple clients, and in this step, for example, one of the multiple clients may be selected.

608. The load balancing controller delivers a flow entry to the layer 7 forwarding device.

The flow entry may include: forwarding a packet confirming to layer 7 information 5 to the client.

609. The layer 7 forwarding device forwards a packet to the client according to the flow entry delivered by the controller.

The forwarding of the packet by the layer 7 forwarding device to the client may be completed by using the layer 4 forwarding device as a relay. Specifically, the packet may be forwarded through a data channel between the layer 7 forwarding device and the layer 4 forwarding device, and then sent to the client by using the layer 4 forwarding device. FIG. 6 shows a packet forwarding path formed by 609a and 609b.

Optionally, the load balancing controller may also determine, according to the packet parsing result, that subsequently the layer 7 forwarding device no longer needs to process the packet, that is, next time the layer 4 forwarding device receives the packet, the layer 7 forwarding device no longer needs to participate in processing. Therefore, in this case, the load balancing controller may further perform 610.

610. The load balancing controller sends a third forwarding entry to the layer 4 forwarding device.

The load balancing controller directly sends a third forwarding entry to the layer 4 forwarding device, where the third forwarding entry includes the first keyword and a third processing policy corresponding to the first keyword, and the third forwarding entry is used to instruct the layer 4 forwarding device to process, when a fourth packet matching the first keyword is received, the fourth packet according to the third processing policy, and do not send a packet to the layer 7 forwarding device.

For example, in 604, the layer 4 forwarding device sends, according to "forwarding a packet conforming to layer 4 information 5 to a layer 7 forwarding device" in the first forwarding entry, a second packet generated according to the first packet to the layer 7 forwarding device. Therefore, in this case, the sent third forwarding entry may include "forwarding a packet conforming to layer 4 information 5 to the client". In this way, next time the layer 4 forwarding device receives a fourth packet matching the first keyword, the layer 4 forwarding device directly performs 611.

611. The layer 4 forwarding device sends a fourth packet matching the first keyword to the client.

It should be noted that, there may be multiple manners in which the layer 7 forwarding device reports a packet parsing result to the load balancing controller, so that the load balancing controller sends a third forwarding entry to the layer 4 forwarding device. For example, after the layer 7 forwarding device reports the packet parsing result, the load balancing controller may determine, according to the packet parsing result, that when subsequently receiving a packet, the layer 7 forwarding device no longer needs to process the packet, and the packet only needs to be processed by the layer 4 forwarding device; accordingly, the load balancing controller sends the third forwarding entry to the layer 4 forwarding device. For another example, when the layer 7 forwarding device determines that the packet does not need to be processed by the layer 7 forwarding device, the layer 7 forwarding device not only may send the packet parsing result to the load balancing controller, but also may send a message to the load balancing controller, where the message is used to instruct the controller to send the third forwarding entry to the layer 4 forwarding device, so that the load balancing controller sends the third forwarding entry to layer 4 forwarding device according to the instruction.

### Embodiment 4

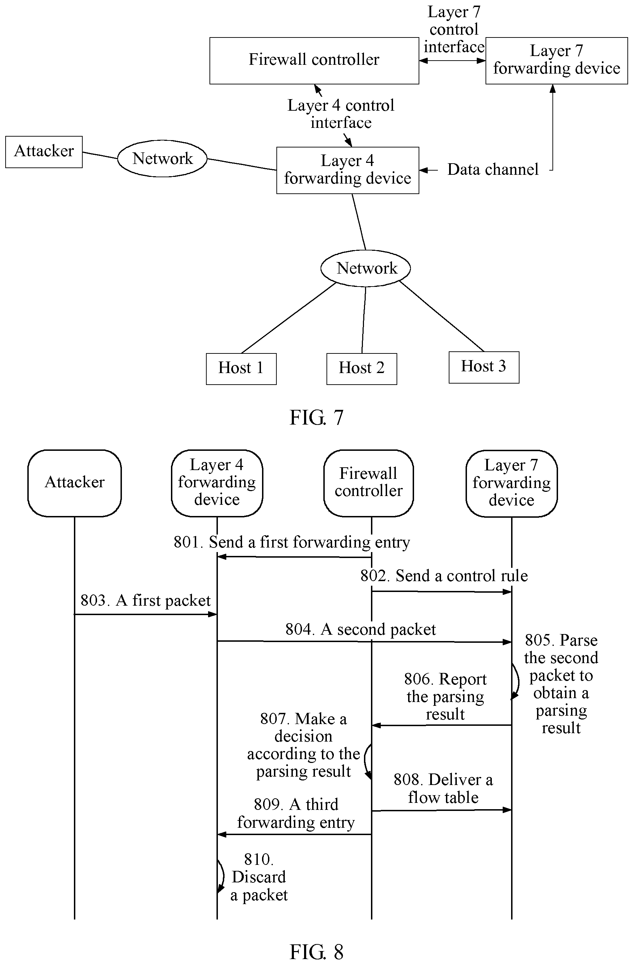

This embodiment uses a firewall service as an example, and a controller for processing the firewall service may be referred to as a firewall controller. Referring to FIG. 7, FIG. 7 is a diagram of a system applying another embodiment of a network service processing method according to the present invention. An architecture of the system is similar to that of FIG. 4. In FIG. 4, a packet is sent between a server and a client; in FIG. 7, a packet is sent between an attacker and a host. The attacker sends an attack packet, and the firewall controller and the shown forwarding devices jointly implement processing of the attack packet, to ensure network security. For some attacks (for example, a Fraggle attack) among network attacks, only a layer 4 forwarding device and a firewall controller are needed to cooperatively complete processing of the attack packet. However, for some attacks (for example, a malformed TCP flag bit attack), a layer 4 forwarding device, a layer 7 forwarding device, and a firewall controller are needed to cooperatively complete processing of the attack packet.

FIG. 8 is a signaling diagram of packet sending in another embodiment of a network service processing method according to the present invention. Because the manner of cooperative processing between the controller, and the layer 4 forwarding device and the layer 7 forwarding device during implementation of a firewall service is similar to that during implementation of a load balancing service except that parsing packet information acquired for different services and processing of corresponding packet information are different, the method of this embodiment is briefly described. As shown in FIG. 8, the method may include:
801. A firewall controller sends a first forwarding entry to a layer 4 forwarding device.

The first forwarding entry includes a first keyword and a first processing policy corresponding to the first keyword, where the first keyword includes layer 4 information for matching a packet, and the layer 4 information is, for example, at least one of a source IP address, a destination IP address, a source port, a destination port, a source MAC address, a destination MAC address, a protocol number, and a VLAN ID.

In this embodiment, the first forwarding entry may be in a form of a flow entry, where the flow entry may be generated according to a characteristic of a network attack. For example, a flow entry for preventing a Fraggle attack may be described as: if a destination IP address of a packet is a broadcast address and a destination port is port 7 or 19 of UDP, discarding the packet. In the flow entry for preventing a Fraggle attack, "broadcast address" and "port 7 or 19 of UDP" are the first keyword, and discarding is the packet processing policy corresponding to the first keyword. A flow entry for preventing a malformed TCP flag bit attack may be described as: if a packet is a TCP packet, forwarding the packet to a layer 7 forwarding device.

802. The firewall controller sends a control rule to a layer 7 forwarding device, where the control rule is used to instruct the layer 7 forwarding device in packet processing.

The control rule may also be sent in a form of a forwarding table, and for example, may be a fourth forwarding entry, where the fourth forwarding entry includes a fourth keyword and a fourth processing policy corresponding to the fourth keyword, and the fourth keyword may include layer 7 information for matching a packet. For example, the layer 7 information may be a TCP flag. For example, a flow entry for preventing a malformed TCP flag attack may be described as: if a TCP flag of a packet is all 0 or all 1, discarding the packet; otherwise, reporting a packet parsing result to the firewall controller for processing. In this example, the foregoing "TCP flag is all 0 or all 1" is the fourth keyword, and "discarding" is the fourth processing policy corresponding to the fourth keyword.

803. The layer 4 forwarding device receives a first packet sent by an attacker.

The layer 4 forwarding device receives the first packet. However, before performing subsequent processing and determining, the layer 4 forwarding device may not know whether the packet is sent by an attacker. For the layer 4 forwarding device, the packet is equivalent to being sent by a client, and the layer 4 forwarding device can determine whether the first packet is a common packet or an attack packet sent by an attacker, only after performing subsequent determining and processing.

804. The layer 4 forwarding device sends a second packet to the layer 7 forwarding device according to the first packet and the first forwarding entry.

The layer 4 forwarding device processes the received first packet according to the first forwarding entry in 801. For example, if a destination IP address of the received first packet is a broadcast address and a destination port is port 7 or 19 of UDP, it indicates that the first packet is a Fraggle attack packet, and the layer 4 forwarding device discards the received first packet. If the first packet is a TCP packet, the layer 4 forwarding device forwards the received first packet to the layer 7 forwarding device according to the first forwarding table. In this embodiment, assuming that the received first packet is a TCP packet, the layer 4 forwarding device sends a second packet to the layer 7 forwarding device according to the first packet. For example, the second packet may be obtained by the layer 4 forwarding device by copying the first packet.

805. The layer 7 forwarding device parses the second packet to obtain a parsing result.

The layer 7 forwarding device buffers and parses the second packet. The parsing result includes layer 7 information. For example, when it needs to be determined whether a packet is a malformed TCP flag bit attack packet, the layer 7 information may include: network quintuple information, TCP flag information, and the like.

806. The layer 7 forwarding device reports the parsing result to the firewall controller according to the control rule.

The layer 7 forwarding device processes a packet based on the control rule received in 802 and according to the obtained packet parsing result. For example, the layer 7 forwarding device processes a packet based on the control rule "if it is found by parsing a packet that a TCP flag is all 0 or all 1, which indicates that the packet is a malformed TCP flag bit attack packet, discarding the packet; otherwise, reporting a parsing result to the firewall controller" that is received in 802. In this embodiment, assuming that in a parsing result obtained by the layer 7 forwarding device by parsing a packet is that a TCP flag is neither all 0 nor all 1, the layer 7 forwarding device reports the parsing result to the firewall controller according to the control rule, and requests the firewall controller to deliver information for further packet processing.

807. The firewall controller makes a decision according to the parsing result.

The firewall controller analyzes the parsing result and performs corresponding processing. For example, if it is found that the packet is dubious, for example, it is found that both SYN and FIN bits in the TCP flag are set to 1, the decision may be processing the packet, for example, discarding, recording, or counting the packet; or if it is found that the packet is normal, the decision may be instructing the layer 7 forwarding device to normally forward the packet.

808. The firewall controller delivers a new flow entry to the layer 7 forwarding device.

After making a decision in 807, the firewall controller generates and delivers a flow entry according to the decision, so that the layer 7 forwarding device performs corresponding processing on the packet according to the received flow entry. That is, the layer 7 forwarding device receives a control rule delivered by a firewall controller in the previous 802, where the control rule in this embodiment is, for example, also in a form of a flow entry. However, the flow entry in 802 includes the foregoing "if a TCP flag of a packet is neither all 0 nor all 1, reporting a packet parsing result to the firewall controller for processing". That is, when the TCP flag is neither all 0 nor all 1, the firewall controller needs to perform further determining according to a parsing result reported by the layer 7 forwarding device, for example, determine whether the packet is an attack packet and how to process the packet. Therefore, in 806, the layer 7 forwarding device reports the parsing result, and the firewall controller makes a decision according to the parsing result and delivers a new flow entry to the layer 7 forwarding device to instruct the layer 7 forwarding device how to process the packet in a next step.

For example, when the second packet is dubious, the layer 7 forwarding device may discard, record, or count the packet according to the flow entry delivered by the firewall in 708; or when the second packet is normal, the layer 7 forwarding device may normally forward the packet according to the flow entry delivered by the firewall, for example, forward the packet to host 2 (where the layer 4 forwarding device may be used as a relay).

809. The firewall controller delivers a third forwarding entry to the layer 4 forwarding device.

If the firewall controller determines, according to the parsing result in 807, that subsequently the layer 7 forwarding device no longer needs to participate in processing, the firewall controller may deliver a third forwarding entry to the layer 4 forwarding device. The third forwarding entry is used to instruct the layer 4 forwarding device to process, when a fourth packet matching the first keyword is received, the fourth packet according to the third processing policy, and do not send a packet to the layer 7 forwarding device. For example, the third forwarding entry may be used to instruct the layer 4 forwarding device to directly discard a packet conforming to quintuple information of an attack packet (where the quintuple information is, for example, the network quintuple information obtained by the layer 7 forwarding device by parsing in 805). Therefore, in this case, the quintuple information is equivalent to the first keyword in the first forwarding entry, and discarding is equivalent to the first processing policy corresponding to the first keyword. In this way, next time the layer 4 forwarding device receives the packet, the layer 4 forwarding device may directly perform 810.

810. The layer 4 forwarding device discards a packet.

It can be seen from the foregoing several embodiments that, in the network service processing method of the embodiments of the present invention, a layer 4 service is processed by a layer 4 forwarding device, and a layer 7 service is processed by a layer 7 forwarding device. In this way, the layer 4 forwarding device can be specially used for processing the layer 4 service, thereby improving a service processing capability and efficiency. Moreover, this solution is also quite flexible. When a layer 7 service needs to be processed, the layer 4 forwarding device can forward the layer 7 service to the layer 7 forwarding device, so that processing of the layer 7 service can be implemented. Optionally, when a controller determines that subsequently the layer 7 forwarding device does not need to participate in packet processing, the controller may further deliver a first forwarding table to the layer 4 forwarding device, so that subsequently the layer 4 forwarding device can directly process a packet. The packet processing manner can be changed flexibly, which also helps improve the processing efficiency.

### Embodiment 5

In the foregoing several embodiments, a controller and a forwarding device implement one service, for example, implement a firewall service or a load balancing service. In this embodiment, a system including a controller and multiple forwarding devices can process a network service chain that is formed by concatenating multiple network services. For example, a service execution order of a network service chain is that: a packet first passes through a firewall and then passes through a load balancer, that is, the packet not only needs to pass security protection of the firewall service, but also needs to be processed for load balancing. In this case, a controller and multiple forwarding devices may be used to form a system to realize the network service chain. Moreover, in an architecture of such a network service chain, a packet forwarding table (which may be referred to as a fifth forwarding table) delivered by a controller to a layer 4 forwarding device or a layer 7 forwarding device may be used to instruct the layer 4 forwarding device or the layer 7 forwarding device to forward a packet to a forwarding device that corresponds to another network service, thereby implementing packet forwarding processing between forwarding devices that process different services.

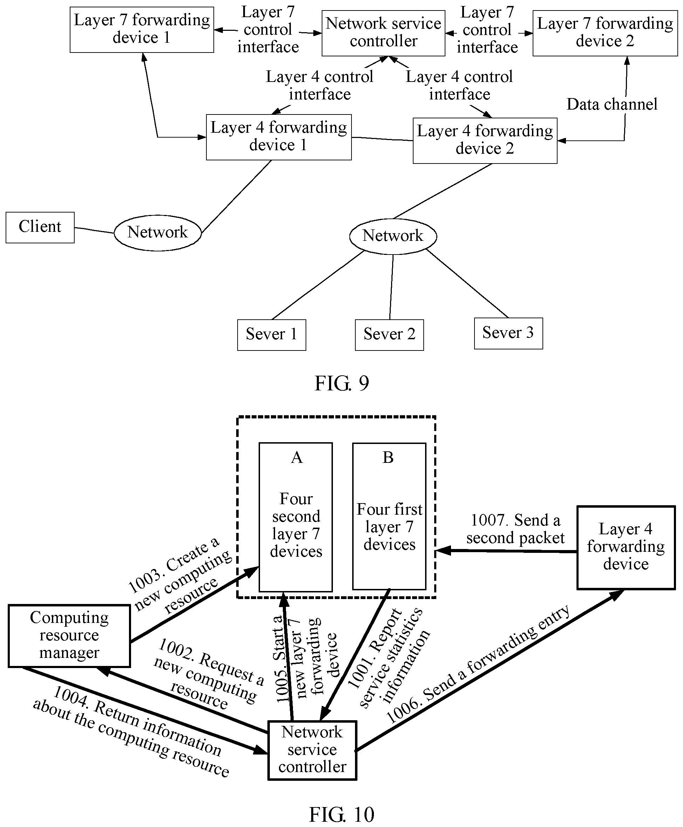

FIG. 9 is a diagram of a system applying still another embodiment of a network service processing method according to the present invention. As shown in FIG. 9, a controller of this embodiment may include a load balancing controller and a firewall controller, and certainly, one controller may also be responsible for controlling two services: a load balancing service and a firewall service. Meanwhile, the controller is further responsible for concatenating the entire network service chain. In addition, a layer 7 forwarding device 1 is a layer 7 forwarding device executing a firewall service, and a layer 7 forwarding device 2 is a layer 7 forwarding device executing a load balancing service; a layer 4 forwarding device 1 is a layer 4 forwarding device of the firewall service, and a layer 4 forwarding device 2 is a layer 4 forwarding device of the load balancing service.

In this embodiment, the controller delivers a flow entry to the layer 4 forwarding device and the layer 7 forwarding device by using a layer 4 control interface and a layer 7 control interface that are shown in the figure. A packet that is processed by using a flow entry may flow in one of the following directions: layer 4 forwarding device 1 -> layer 4 forwarding device 2 (where layer 4 processing is performed on the packet in both the firewall service and the load balancing service, and then the packet is sent to a server); layer 4 forwarding device 1 -> layer 7 forwarding device 1 -> layer 4 forwarding device 2 (where layer 4 processing and layer 7 processing are performed on the packet in the firewall service, and layer 4 processing is performed on the packet in the load balancing service); layer 4 forwarding device 1 -> layer 4 forwarding device 2 -> layer 7 forwarding device 2 (where layer 4 processing is performed on the packet in the firewall service, and layer 4 processing and layer 7 processing are performed on the packet in the load balancing service); and layer 4 forwarding device 1 -> layer 7 forwarding device 1 -> layer 4 forwarding device 2 -> layer 7 forwarding device 2 (where layer 4 processing and layer 7 processing are performed on the packet in both the firewall service and the load balancing service).

In a structure of such a network service chain, packet processing information sent by the controller to a forwarding device includes a flow entry used to instruct the forwarding device to forward a packet to a forwarding device corresponding to another network service. For example, in a path of layer 4 forwarding device 1 -> layer 4 forwarding device 2, the flow entry sent by the controller to the layer 4 forwarding device 1 is used to instruct the layer 4 forwarding device 1 to forward the packet to the layer 4 forwarding device 2 of the other service, that is, the load balancing service. In addition, a data channel is provided between forwarding devices, and a packet is forwarded through the data channel. For example, in a path of layer 4 forwarding device 1 -> layer 7 forwarding device 1 -> layer 4 forwarding device 2 -> layer 7 forwarding device 2, a packet from the layer 7 forwarding device 1 to layer 4 forwarding device 2 may follow a path of layer 7 forwarding device 1 -> layer 4 forwarding device 1 -> layer 4 forwarding device 2, that is, may be forwarded by using the layer 4 forwarding device 1.

In a structure of a network service chain, packet processing and control between a controller and a forwarding device of each service are similar to the manners in the foregoing embodiments, and details are not described herein again.

### Embodiment 6

In the prior art, network services of various layers are all processed by a same device, and when a service volume of a layer changes, the device cannot dynamically adapt to the change quickly. For example, if a layer 7 service volume greatly increases, a processing capability for a layer 7 service needs to be improved in fact. To this end, in the prior art, a high-capability processing device needs to be used instead or a quantity of processing devices needs to be increased, which leads to high costs and low efficiency. A controller in this embodiment of the present invention can separately perform service control on a layer 7 forwarding device according to service statistics information reported by a layer 7 forwarding device, for example, create a new layer 7 forwarding device, that is, increase a quantity of layer 7 forwarding devices. This manner does not involve a change in a layer 4 forwarding device, and a processing capability of the layer 7 forwarding device can be expanded in real time according to the service statistics information reported in real time by the layer 7 forwarding device, thereby achieving high service adaptability, and flexibly improving a service processing capability of a system.

Specifically, in this embodiment of the present invention, the network service processing system includes a layer 4 forwarding device and a first layer 7 forwarding device. The controller receives service statistics information sent by the first layer 7 forwarding device. The controller adds a second layer 7 forwarding device according to the service statistics information, where a data channel used to transmit a packet exists between the second layer 7 forwarding device and the layer 4 forwarding device.

FIG. 10 is a diagram of a system applying still another embodiment of a network service processing method according to the present invention. In this embodiment, a controller can expand in real time a quantity of layer 7 forwarding devices according to a change in a service volume processed by the layer 7 forwarding device, so as to adapt to the change in the service volume. The method includes:
1001. A first layer 7 forwarding device reports service statistics information to a controller.

For example, the service statistics information may include, network traffic, CPU and memory usage of the layer 7 forwarding device, and the like. Four first layer 7 forwarding devices included in box B in FIG. 10 are currently existing devices.

1002. The controller determines, according to the service statistics information, that a second layer 7 forwarding device needs to be added, and requests a computing resource manager for a new computing resource.

For example, the controller determines, according to the service statistics information reported by the first layer 7 forwarding device, that a service volume of the current first layer 7 forwarding device side greatly increases and load of the first layer 7 forwarding device is relatively heavy. In this case, the controller determines that the quantity of layer 7 forwarding devices needs to be increased, and therefore requests the computing resource manager for a new computing resource, to prepare for adding a second layer 7 forwarding device.

1003. The computing resource manager creates a new computing resource.

Herein, the creating a new computing resource is to create a second layer 7 forwarding device, that is, four second layer 7 forwarding devices included in box A shown in FIG. 10. In this embodiment, it is assumed that four second layer 7 forwarding devices are added.

1004. The computing resource manager returns, to the controller, information about the computing resource created by the controller.

For example, the information that is about the computing resource, that is, about the second layer 7 forwarding device and that is returned by the computing resource manager may include: an IP address, a computing capability and the like of the second layer 7 forwarding device, to inform the controller that the second layer 7 forwarding device has been created.

1005. The controller starts the second layer 7 forwarding device.

For example, the controller may further deliver a layer 7 flow entry to the second layer 7 forwarding device, so that the second layer 7 forwarding device subsequently performs forwarding processing of a received packet according to the layer 7 flow entry.

1006. The controller sends a forwarding entry to a layer 4 forwarding device.

The forwarding entry includes a keyword and a processing policy corresponding to the keyword, the keyword includes layer 4 information for matching a packet, and the forwarding entry is used to instruct the layer 4 forwarding device to send a second packet to the second layer 7 forwarding device according to the processing policy when a first packet matching the keyword is received. That is, in this case, a part of traffic originally sent to the first layer 7 forwarding devices in box B may be offloaded to the second layer 7 forwarding device, to reduce the burden of the first layer 7 forwarding devices.

1007. When a first packet matching the keyword is received, the layer 4 forwarding device sends a second packet to the second layer 7 forwarding device according to the processing policy.

By means of the network service processing method of this embodiment, dynamic expansion of layer 7 forwarding devices can be implemented, so as to dynamically adapt to a change in a service volume.

### Embodiment 7

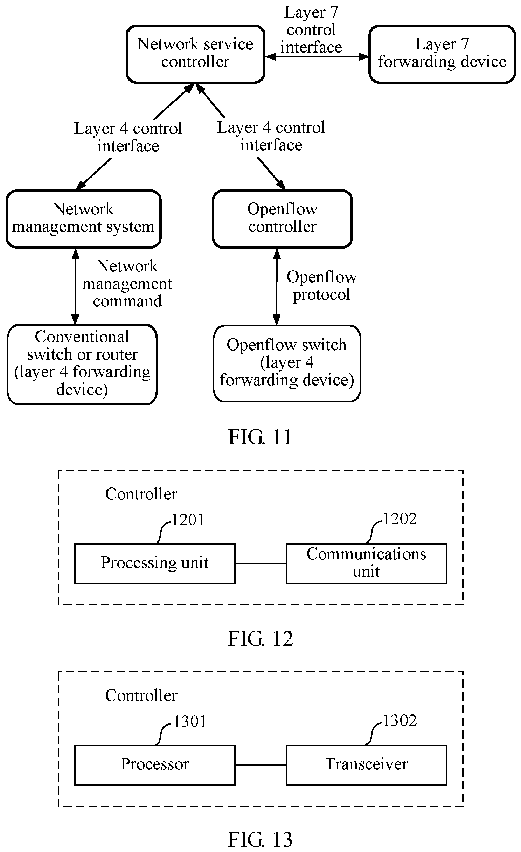

FIG. 11 is a diagram of a system applying still another embodiment of a network service processing method according to the present invention. As shown in FIG. 11, this embodiment is mainly used to describe that a controller may not directly control a layer 4 forwarding device, but control the layer 4 forwarding device by using an intermediate control device.

Referring to FIG. 11, for example, the intermediate control device may be an Openflow controller or a network management system, and the controller may indirectly control the layer 4 forwarding device by using an Openflow controller or a network management system. The controller may communicate with the Openflow controller or the network management system by using a layer 4 control interface, and sends a fourth forwarding table to the Openflow controller or the network management system by using the layer 4 control interface; then, the Openflow controller or the network management system sends the fourth forwarding table to the layer 4 forwarding device.

A format of information transmitted between the controller and the Openflow controller or the network management system may be a format specified in a protocol of the two; a format of information transmitted between the Openflow controller or the network management system and the layer 4 forwarding device may also be a format specified in the protocol of the two.

### Embodiment 8

FIG. 12 is a schematic structural diagram of an embodiment of a controller according to the present invention. As shown in FIG. 12, the controller may include: a processing unit 1201 and a communications unit 1202

The processing unit 1201 is configured to generate a first forwarding entry, where the first forwarding entry includes a first keyword and a first processing policy corresponding to the first keyword, and the first keyword includes layer 4 information for matching a packet.

The communications unit 1202 is configured to send the first forwarding entry to a layer 4 forwarding device, where the first forwarding entry is used to instruct the layer 4 forwarding device to send a second packet to the layer 7 forwarding device according to the first processing policy when a first packet matching the first keyword is received.

The processing unit 1201 is further configured to generate a control rule, where the control rule is used to instruct the layer 7 forwarding device in packet processing.

The communications unit 1202 is further configured to send the control rule to the layer 7 forwarding device, so that the layer 7 forwarding device processes the second packet according to the control rule.

Optionally, the processing unit 1201 is further configured to generate a second forwarding entry, where the second forwarding entry includes a second keyword and a second processing policy corresponding to the second keyword, and the second keyword includes layer 4 information for matching a packet. The communications unit 1202 is further configured to send the second forwarding entry to the layer 4 forwarding device, where the second forwarding entry is used to instruct the layer 4 forwarding device to process, when a third packet matching the second keyword is received, the third packet according to the second processing policy, and do not send a packet to the layer 7 forwarding device.

Optionally, the communications unit 1202 is further configured to receive a packet parsing result sent by the layer 7 forwarding device, where the packet parsing result is obtained by the layer 7 forwarding device by parsing the second packet. The processing unit 1201 is further configured to generate a third forwarding entry according to the packet parsing result, where the third forwarding entry includes the first keyword and a third processing policy corresponding to the first keyword. The communications unit 1202 is further configured to send the third forwarding entry to the layer 4 forwarding device, where the third forwarding entry is used to instruct the layer 4 forwarding device to process, when a fourth packet matching the first keyword is received, the fourth packet according to the third processing policy, and do not send a packet to the layer 7 forwarding device.

For implementation details of the embodiment shown in FIG. 12, refer to the descriptions of the foregoing method embodiments, and the details are not described herein again.

FIG. 13 is a schematic structural diagram of an embodiment of a controller according to the present invention. As shown in FIG. 13, the controller may include: a processor 1301 and a transceiver 1302.

The processor 1301 is configured to generate a first forwarding entry, where the first forwarding entry includes a first keyword and a first processing policy corresponding to the first keyword, and the first keyword includes layer 4 information for matching a packet.

The transceiver 1302 is configured to send the first forwarding entry to a layer 4 forwarding device, where the first forwarding entry is used to instruct the layer 4 forwarding device to send a second packet to the layer 7 forwarding device according to the first processing policy when a first packet matching the first keyword is received.

The processor 1301 is further configured to generate a control rule, where the control rule is used to instruct the layer 7 forwarding device in packet processing.

The transceiver 1302 is further configured to send the control rule to the layer 7 forwarding device, so that the layer 7 forwarding device processes the second packet according to the control rule.

Optionally, the processor 1301 is further configured to generate a second forwarding entry, where the second forwarding entry includes a second keyword and a second processing policy corresponding to the second keyword, and the second keyword includes layer 4 information for matching a packet. The transceiver 1302 is further configured to send the second forwarding entry to the layer 4 forwarding device, where the second forwarding entry is used to instruct the layer 4 forwarding device to process, when a third packet matching the second keyword is received, the third packet according to the second processing policy, and do not send a packet to the layer 7 forwarding device.

Optionally, the transceiver 1302 is further configured to receive a packet parsing result sent by the layer 7 forwarding device, where the packet parsing result is obtained by the layer 7 forwarding device by parsing the second packet. The processor 1301 is further configured to generate a third forwarding entry according to the packet parsing result, where the third forwarding entry includes the first keyword and a third processing policy corresponding to the first keyword. The transceiver 1302 is further configured to send the third forwarding entry to the layer 4 forwarding device, where the third forwarding entry is used to instruct the layer 4 forwarding device to process, when a fourth packet matching the first keyword is received, the fourth packet according to the third processing policy, and do not send a packet to the layer 7 forwarding device.

For implementation details of the embodiment shown in FIG. 13, refer to the descriptions about operations executed by the controller in the foregoing method embodiments, and the details are not described herein again.

### Embodiment 9

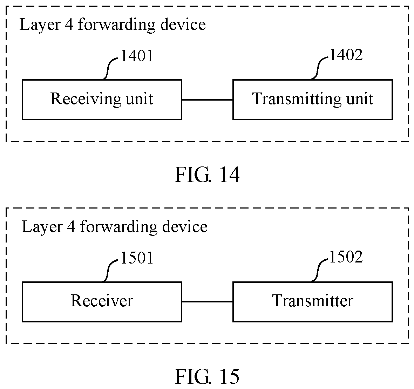

FIG. 14 is a schematic structural diagram of an embodiment of a layer 4 forwarding device according to the present invention. As shown in FIG. 14, the layer 4 forwarding device may include: a receiving unit 1401 and a transmitting unit 1402.

The receiving unit 1401 is configured to receive a first forwarding entry sent by a controller, where the first forwarding entry includes a first keyword and a first processing policy corresponding to the first keyword, the first keyword includes layer 4 information for matching a packet, and the first forwarding entry is used to instruct the layer 4 forwarding device to send a second packet to a layer 7 forwarding device according to the first processing policy when a first packet matching the first keyword is received.

The receiving unit 1401 is further configured to receive the first packet.

The transmitting unit 1402 is configured to send the second packet to the layer 7 forwarding device through a data channel according to the first forwarding entry after the receiving unit 1401 receives the first packet.

Optionally, the receiving unit 1401 is further configured to receive a second forwarding entry sent by the controller, where the second forwarding entry includes a second keyword and a second processing policy corresponding to the second keyword, the second keyword includes layer 4 information for matching a packet, and the second forwarding entry is used to instruct the layer 4 forwarding device to process, when a third packet matching the second keyword is received, the third packet according to the second processing policy, and do not send a packet to the layer 7 forwarding device.

FIG. 15 is a schematic structural diagram of an embodiment of a layer 4 forwarding device according to the present invention. As shown in FIG. 15, the layer 4 forwarding device may include: a receiver 1501 and a transmitter 1502.

The receiver 1501 is configured to receive a first forwarding entry sent by a controller, where the first forwarding entry includes a first keyword and a first processing policy corresponding to the first keyword, the first keyword includes layer 4 information for matching a packet, and the first forwarding entry is used to instruct the layer 4 forwarding device to send a second packet to a layer 7 forwarding device according to the first processing policy when a first packet matching the first keyword is received.

The receiver 1501 is further configured to receive the first packet.

The transmitter 1502 is configured to send the second packet to the layer 7 forwarding device through a data channel according to the first forwarding entry after the receiver 1501 receives the first packet.

Optionally, the receiver 1501 is further configured to receive a second forwarding entry sent by the controller, where the second forwarding entry includes a second keyword and a second processing policy corresponding to the second keyword, the second keyword includes layer 4 information for matching a packet, and the second forwarding entry is used to instruct the layer 4 forwarding device to process, when a third packet matching the second keyword is received, the third packet according to the second processing policy, and do not send a packet to the layer 7 forwarding device.

For implementation details of the embodiments shown in FIG. 14 and FIG. 15, refer to the descriptions about operations executed by the layer 4 forwarding device in the foregoing method embodiments, and the details are not described herein again.

### Embodiment 10

This embodiment of the present invention further provides a controller, which is applied to a network service processing system including a layer 4 forwarding device and a first layer 7 forwarding device, the layer 4 forwarding device and the first layer 7 forwarding device separately communicate with the controller, and a data channel used to transmit a packet exists between the layer 4 forwarding device and the first layer 7 forwarding device. The controller includes:
a communications unit, configured to receive service statistic information sent by the first layer 7 forwarding device; and
a processing unit, configured to add a second layer 7 forwarding device according to the service statistics information, where a data channel used to transmit a packet exists between the second layer 7 forwarding device and the layer 4 forwarding device.

Optionally, the processing unit is specifically configured to determine, according to the service statistics information, that the second layer 7 forwarding device needs to be added, add the second layer 7 forwarding device to the system, and send a forwarding entry to the layer 4 forwarding device, where the forwarding entry includes a keyword and a processing policy corresponding to the keyword, the keyword includes layer 4 information for matching a packet, and the forwarding entry is used to instruct the layer 4 forwarding device to send a second packet to the second layer 7 forwarding device according to the processing policy when a first packet matching the keyword is received.

### Embodiment 11

This embodiment provides a network service processing system, including the layer 4 forwarding device and the controller that are described above and a layer 7 forwarding device. The layer 4 forwarding device and the layer 7 forwarding device separately communicate with the controller. A data channel used to transmit a network service packet exists between the layer 4 forwarding device and the layer 7 forwarding device.

For example, the system includes a controller and a forwarding device that is used to process a first network layer service. A structure of the system may be, for example, the structure shown in FIG. 1. The network service processing system may include only a controller and a layer 4 forwarding device, or may include a controller, a layer 4 forwarding device, and a layer 7 forwarding device.

Further, the layer 4 forwarding device and controller may be connected by using a layer 4 control interface, and the controller sends packet processing information to the layer 4 forwarding device by using the layer 4 control interface. Likewise, the layer 7 forwarding device and the controller may be connected by using a layer 7 control interface, and the controller sends packet processing information to the layer 7 forwarding device by using the layer 7 control interface. A data channel used to forward a network service packet may be provided between the layer 7 forwarding device and the layer 4 forwarding device.

Further, the layer 7 forwarding device may include: multiple layer 7 forwarding devices respectively corresponding to different layer 7 protocols, or multiple layer 7 forwarding devices respectively corresponding to different network services. For example, according to different layer 7 services, there may be different layer 7 forwarding devices, for example, a layer 7 load balancing forwarding device, and a layer 7 firewall forwarding device. The layer 7 load balancing forwarding device may be further classified, for example, as a layer 7 HTTP load balancing forwarding device or a layer 7 SIP load balancing forwarding device according to different layer 7 protocols supported. Optionally, because there are many layer 7 protocols, one layer 7 forwarding device may process one layer 7 protocol, or one layer 7 forwarding device may process multiple layer 7 protocols.

Further, the forwarding device may include: multiple forwarding devices respectively corresponding to different network services. For example, a network service processing system shown in FIG. 7 includes forwarding devices of multiple services in a network service chain, and forwarding devices of different services may jointly form a processing system to implement concatenation of multiple services.

Further, when forwarding devices respectively corresponding to different services exist in the system, the forwarding devices belonging to the different network services may be separately controlled by controllers corresponding to the network services, or controlled by a same controller. For example, forwarding devices of a firewall service and a load balancing service that are shown in FIG. 7 may be separately controlled by respective controllers of the services. For example, the forwarding device of the firewall service is controlled by a firewall controller, and the forwarding device of the load balancing service is controlled by a load balancing controller; or, the forwarding devices of the firewall service and the load balancing service are both controlled by a same controller. One controller may control one or more layer 4 forwarding devices. One controller may also control one or more layer 7 forwarding devices. Correspondingly, for the purpose of reliability, one layer 4 forwarding device or layer 7 forwarding device may be controlled by multiple primary/standby controllers. According to different network services, there may be different controllers, for example, a load balancing controller, a firewall controller, and an IPSec/SSL VPN gateway controller.

Further, this embodiment of the present invention provides an implementation manner of an interaction process between a layer 7 forwarding device and a controller, including:

A registration procedure: in which the layer 7 forwarding device registers with the controller. A registration request may include information such as a layer 7 forwarding device identifier, authentication information, a protocol version number, and a layer 7 service type (such as a load balancing service or a firewall service). The controller returns a registration response to indicate whether the registration succeeds or fails.

A capability exchanging procedure: in which the two parties perform service capability negotiation. Capabilities that can be exchanged include a layer 7 service protocol (such as HTTP or FTP) and a layer 7 service processing capability (such as maximum concurrent connections or new connections per second).

A layer 7 request processing procedure: in which the layer 7 forwarding device requests the controller for a flow entry.

A layer 7 delivery processing procedure: in which the controller delivers a flow entry to the layer 7 forwarding device, where the flow entry may be actively delivered by the controller, or may be delivered by the controller after receiving a request of the layer 7 forwarding device. The layer 7 request processing procedure and the layer 7 delivery processing procedure herein have been described in the foregoing method embodiments, and are not described in detail herein again.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A packet processing method, applied to a system comprising a layer 4 forwarding device, a layer 7 forwarding device, and a controller, wherein the layer 4 forwarding device and the layer 7 forwarding device separately communicate with the controller, and a data channel used to transmit a packet exists between the layer 4 forwarding device and the layer 7 forwarding device; and the method comprises:
sending (201, 501, 601, 801), by the controller, a first forwarding entry to the layer 4 forwarding device, wherein the first forwarding entry comprises a first keyword and a first processing policy corresponding to the first keyword, the first keyword comprises layer 4 information for matching a packet, and the first forwarding entry is used to instruct the layer 4 forwarding device to send a second packet to the layer 7 forwarding device according to the first processing policy when a first packet matching the first keyword is received; and
sending (202, 502, 602, 802), by the controller, to the layer 7 forwarding device, a control rule used to instruct the layer 7 forwarding device in packet processing, so that the layer 7 forwarding device processes the second packet according to the control rule.

2. The method according to claim 1, further comprising:
sending, by the controller, a second forwarding entry to the layer 4 forwarding device, wherein the second forwarding entry comprises a second keyword and a second processing policy corresponding to the second keyword, the second keyword comprises layer 4 information for matching a packet, and the second forwarding entry is used to instruct the layer 4 forwarding device to process, when a third packet matching the second keyword is received, the third packet according to the second processing policy, and skip sending a packet to the layer 7 forwarding device.

3. The method according to claim 1 or 2, after the sending, by the controller, a control rule to the layer 7 forwarding device, further comprising:
receiving, by the controller, a packet parsing result sent by the layer 7 forwarding device, wherein the packet parsing result is obtained by the layer 7 forwarding device by parsing the second packet; and
sending, by the controller, a third forwarding entry to the layer 4 forwarding device according to the packet parsing result, wherein the third forwarding entry comprises the first keyword and a third processing policy corresponding to the first keyword, and the third forwarding entry is used to instruct the layer 4 forwarding device to process, when a fourth packet matching the first keyword is received, the fourth packet according to the third processing policy, and skip sending a packet to the layer 7 forwarding device.

4. The method according to claim 3, before the receiving, by the controller, a packet parsing result sent by the layer 7 forwarding device, further comprising:
sending, by the controller, condition layer 7 information to the layer 7 forwarding device, wherein the condition layer 7 information is used to instruct the layer 7 forwarding device to send the packet parsing result when obtaining the condition layer 7 information by parsing the second packet.

5. The method according to claim 3 or 4, before the sending, by the controller, a third forwarding entry to the layer 4 forwarding device, further comprising:
receiving, by the controller, a message sent by the layer 7 forwarding device, wherein the message is used to instruct the controller to send the third forwarding entry to the layer 4 forwarding device.

6. The method according to any one of claims 1 to 5, wherein the method further comprises:
receiving, by the controller, service statistics information sent by the layer 7 forwarding device; and
adding, by the controller, a second layer 7 forwarding device according to the service statistics information, wherein a data channel used to transmit a packet exists between the second layer 7 forwarding device and the layer 4 forwarding device.

7. The method according to claim 6, wherein the adding, by the controller, a second layer 7 forwarding device according to the service statistics information comprises:
determining, by the controller, according to the service statistics information, that the second layer 7 forwarding device needs to be added; and
adding, by the controller, the second layer 7 forwarding device to the system, and sending another forwarding entry to the layer 4 forwarding device, wherein the another forwarding entry comprises a keyword and a processing policy corresponding to the keyword, and the keyword comprises layer 4 information for matching a packet, and the another forwarding entry is used to instruct the layer 4 forwarding device to send another packet to the second layer 7 forwarding device according to the processing policy when a packet matching the keyword is received.

8. A packet processing method, applied to a system comprising a layer 4 forwarding device, a layer 7 forwarding device, and a controller, wherein the layer 4 forwarding device and the layer 7 forwarding device separately communicate with the controller, and a data channel used to transmit a packet exists between the layer 4 forwarding device and the layer 7 forwarding device; and the method comprises:
receiving (301, 501, 601, 801), by the layer 4 forwarding device, a first forwarding entry sent by the controller, wherein the first forwarding entry comprises a first keyword and a first processing policy corresponding to the first keyword, the first keyword comprises layer 4 information for matching a packet, and the first forwarding entry is used to instruct the layer 4 forwarding device to send a second packet to the layer 7 forwarding device according to the first processing policy when a first packet matching the first keyword is received;
receiving (302, 503, 603, 803), by the layer 4 forwarding device, the first packet; and
sending (303, 504, 604, 804), by the layer 4 forwarding device, the second packet to the layer 7 forwarding device through the data channel according to the first forwarding entry.

9. The method according to claim 8, further comprising:
receiving, by the layer 4 forwarding device, a second forwarding entry sent by the controller, wherein the second forwarding entry comprises a second keyword and a second processing policy corresponding to the second keyword, the second keyword comprises layer 4 information for matching a packet, and the second forwarding entry is used to instruct the layer 4 forwarding device to process, when a third packet matching the second keyword is received, the third packet according to the second processing policy, and skip sending a packet to the layer 7 forwarding device.

10. The method according to claim 9, after the sending, by the layer 4 forwarding device, the second packet to the layer 7 forwarding device through the data channel, further comprising:
receiving, by the layer 4 forwarding device, a third forwarding entry sent by the controller, wherein the third forwarding entry comprises the first keyword and a third processing policy corresponding to the first keyword, and the third forwarding entry is used to instruct the layer 4 forwarding device to process, when a fourth packet matching the first keyword is received, the fourth packet according to the third processing policy, and skip sending a packet to the layer 7 forwarding device.

11. A controller, comprising:
a processing unit (1201), configured to generate a first forwarding entry, wherein the first forwarding entry comprises a first keyword and a first processing policy corresponding to the first keyword, and the first keyword comprises layer 4 information for matching a packet; and
a communications unit (1202), configured to send the first forwarding entry to a layer 4 forwarding device, wherein the first forwarding entry is used to instruct the layer 4 forwarding device to send a second packet to the layer 7 forwarding device according to the first processing policy when a first packet matching the first keyword is received, wherein
the processing unit (1201) is further configured to generate a control rule, wherein the control rule is used to instruct the layer 7 forwarding device in packet processing; and
the communications unit (1202) is further configured to send the control rule to the layer 7 forwarding device, so that the layer 7 forwarding device processes the second packet according to the control rule.

12. The controller according to claim 11, wherein
the processing unit (1201) is further configured to generate a second forwarding entry, wherein the second forwarding entry comprises a second keyword and a second processing policy corresponding to the second keyword, and the second keyword comprises layer 4 information for matching a packet; and
the communications unit (1202) is further configured to send the second forwarding entry to the layer 4 forwarding device, wherein the second forwarding entry is used to instruct the layer 4 forwarding device to process, when a third packet matching the second keyword is received, the third packet according to the second processing policy, and skip sending a packet to the layer 7 forwarding device.

13. The controller according to claim 11 or 12, wherein
the communications unit (1202) is further configured to receive a packet parsing result sent by the layer 7 forwarding device, wherein the packet parsing result is obtained by the layer 7 forwarding device by parsing the second packet;
the processing unit (1201) is further configured to generate a third forwarding entry according to the packet parsing result, wherein the third forwarding entry comprises the first keyword and a third processing policy corresponding to the first keyword; and
the communications unit (1202) is further configured to send the third forwarding entry to the layer 4 forwarding device, wherein the third forwarding entry is used to instruct the layer 4 forwarding device to process, when a fourth packet matching the first keyword is received, the fourth packet according to the third processing policy, and skip sending a packet to the layer 7 forwarding device.

14. A layer 4 forwarding device, comprising: a receiving unit (1401) and a transmitting unit (1402), wherein
the receiving unit (1401) is configured to receive a first forwarding entry sent by a controller, wherein the first forwarding entry comprises a first keyword and a first processing policy corresponding to the first keyword, the first keyword comprises layer 4 information for matching a packet, and the first forwarding entry is used to instruct the layer 4 forwarding device to send a second packet to a layer 7 forwarding device according to the first processing policy when a first packet matching the first keyword is received;
the receiving unit (1401) is further configured to receive the first packet; and
the transmitting unit (1401) is configured to send the second packet to the layer 7 forwarding device through a data channel according to the first forwarding entry after the receiving unit (1401) receives the first packet.

15. The layer 4 forwarding device according to claim 14, wherein,
the receiving unit (1401) is further configured to receive a second forwarding entry sent by the controller, wherein the second forwarding entry comprises a second keyword and a second processing policy corresponding to the second keyword, the second keyword comprises layer 4 information for matching a packet, and the second forwarding entry is used to instruct the layer 4 forwarding device to process, when a third packet matching the second keyword is received, the third packet according to the second processing policy, and skip sending a packet to the layer 7 forwarding device.

## Patentansprüche

1. Paketverarbeitungsverfahren, das auf ein System angewendet wird, das eine Schicht-4-Weiterleitungsvorrichtung, eine Schicht-7-Weiterleitungsvorrichtung und eine Steuerung umfasst, wobei die Schicht-4-Weiterleitungsvorrichtung und die Schicht-7-Weiterleitungsvorrichtung separat mit der Steuerung kommunizieren und ein zum Übertragen eines Pakets genutzter Datenkanal zwischen der Schicht-4-Weiterleitungsvorrichtung und der Schicht-7-Weiterleitungsvorrichtung vorhanden ist; und das Verfahren Folgendes umfasst:
Senden (201, 501, 601, 801) eines ersten Weiterleitungseintrags durch die Steuerung an die Schicht-4-Weiterleitungsvorrichtung, wobei der erste Weiterleitungseintrag ein erstes Schlüsselwort und eine mit dem ersten Schlüsselwort korrespondierende erste Verarbeitungsrichtlinie umfasst, das erste Schlüsselwort Schicht-4-Informationen zum Abgleichen eines Pakets umfasst und der erste Weiterleitungseintrag genutzt wird, um die Schicht-4-Weiterleitungsvorrichtung zum Senden eines zweiten Pakets an die Schicht-7-Weiterleitungsvorrichtung gemäß der ersten Verarbeitungsrichtlinie anzuweisen, wenn ein zum ersten Schlüsselwort passendes erstes Paket empfangen wird; und
Senden (202, 502, 602, 802) einer zum Anweisen der Schicht-7-Weiterleitungsvorrichtung bei der Paketverarbeitung genutzten Steuerungsregel durch die Steuerung an die Schicht-7-Weiterleitungsvorrichtung, damit die Schicht-7-Weiterleitungsvorrichtung das zweite Paket gemäß der Steuerungsregel verarbeitet.

2. Verfahren nach Anspruch 1, das ferner Folgendes umfasst:
Senden eines zweiten Weiterleitungseintrags durch die Steuerung an die Schicht-4-Weiterleitungsvorrichtung, wobei der zweite Weiterleitungseintrag ein zweites Schlüsselwort und eine mit dem zweiten Schlüsselwort korrespondierende zweite Verarbeitungsrichtlinie umfasst, das zweite Schlüsselwort Schicht-4-Informationen zum Abgleichen eines Pakets umfasst und der zweite Weiterleitungseintrag genutzt wird, um die Schicht-4-Weiterleitungsvorrichtung, wenn ein zum zweiten Schlüsselwort passendes drittes Paket empfangen wird, zum Verarbeiten des dritten Pakets gemäß der zweiten Verarbeitungsrichtlinie und zum Auslassen des Sendens eines Pakets an die Schicht-7-Weiterleitungsvorrichtung anzuweisen.

3. Verfahren nach Anspruch 1 oder 2, das nach dem Senden einer Steuerungsregel durch die Steuerung an die Schicht-7-Weiterleitungsvorrichtung ferner Folgendes umfasst:
Empfangen eines durch die Schicht-7-Weiterleitungsvorrichtung gesendeten Paket-Parsing-Ergebnisses durch die Steuerung, wobei das Paket-Parsing-Ergebnis durch die Schicht-7-Weiterleitungsvorrichtung erhalten wird, indem das zweite Paket geparst wird; und
Senden eines dritten Weiterleitungseintrags durch die Steuerung an die Schicht-4-Weiterleitungsvorrichtung gemäß dem Paket-Parsing-Ergebnis, wobei der dritte Weiterleitungseintrag das erste Schlüsselwort und eine mit dem ersten Schlüsselwort korrespondierende dritte Verarbeitungsrichtlinie umfasst und der dritte Weiterleitungseintrag genutzt wird, um die Schicht-4-Weiterleitungsvorrichtung, wenn ein zum ersten Schlüsselwort passendes viertes Paket empfangen wird, zum Verarbeiten des vierten Pakets gemäß der dritten Verarbeitungsrichtlinie und zum Auslassen des Sendens eines Pakets an die Schicht-7-Weiterleitungsvorrichtung anzuweisen.

4. Verfahren nach Anspruch 3, das vor dem Empfangen eines durch die Schicht-7-Weiterleitungsvorrichtung gesendeten Paket-Parsing-Ergebnisses durch die Steuerung ferner Folgendes umfasst:
Senden von Bedingungs-Schicht-7-Informationen durch die Steuerung an die Schicht-7-Weiterleitungsvorrichtung, wobei die Bedingungs-Schicht-7-Informationen genutzt werden, um die Schicht-7-Weiterleitungsvorrichtung zum Senden des Paket-Parsing-Ergebnisses anzuweisen, wenn die Bedingungs-Schicht-7-Informationen erhalten werden, indem das zweite Paket geparst wird.

5. Verfahren nach Anspruch 3 oder 4, das vor dem Senden eines dritten Weiterleitungseintrags durch die Steuerung an die Schicht-4-Weiterleitungsvorrichtung ferner Folgendes umfasst:
Empfangen einer durch die Schicht-7-Weiterleitungsvorrichtung gesendeten Nachricht durch die Steuerung, wobei die Nachricht genutzt wird, um die Steuerung zum Senden des dritten Weiterleitungseintrags an die Schicht-4-Weiterleitungsvorrichtung anzuweisen.

6. Verfahren nach einem der Ansprüche 1 bis 5, wobei das Verfahren ferner Folgendes umfasst:
Empfangen von durch die Schicht-7-Weiterleitungsvorrichtung gesendeten Dienststatistikinformationen durch die Steuerung; und
Hinzufügen einer zweiten Schicht-7-Weiterleitungsvorrichtung durch die Steuerung gemäß den Dienststatistikinformationen, wobei ein zum Übertragen eines Pakets genutzter Datenkanal zwischen der zweiten Schicht-7-Weiterleitungsvorrichtung und der Schicht-4-Weiterleitungsvorrichtung vorhanden ist.

7. Verfahren nach Anspruch 6, wobei das Hinzufügen einer zweiten Schicht-7-Weiterleitungsvorrichtung durch die Steuerung gemäß den Dienststatistikinformationen Folgendes umfasst:
Bestimmen durch die Steuerung gemäß den Dienststatistikinformationen, dass die zweite Schicht-7-Weiterleitungsvorrichtung hinzugefügt werden muss; und
Hinzufügen der zweiten Schicht-7-Weiterleitungsvorrichtung durch die Steuerung zum System und Senden eines weiteren Weiterleitungseintrags an die Schicht-4-Weiterleitungsvorrichtung, wobei der weitere Weiterleitungseintrag ein Schlüsselwort und eine mit dem Schlüsselwort korrespondierende Verarbeitungsrichtlinie umfasst und das Schlüsselwort Schicht-4-Informationen zum Abgleichen eines Pakets umfasst und der weitere Weiterleitungseintrag genutzt wird, um die Schicht-4-Weiterleitungsvorrichtung zum Senden eines weiteren Pakets an die zweite Schicht-7-Weiterleitungsvorrichtung gemäß der Verarbeitungsrichtlinie anzuweisen, wenn ein zum Schlüsselwort passendes Paket empfangen wird.

8. Paketverarbeitungsverfahren, das auf ein System angewendet wird, das eine Schicht-4-Weiterleitungsvorrichtung, eine Schicht-7-Weiterleitungsvorrichtung und eine Steuerung umfasst, wobei die Schicht-4-Weiterleitungsvorrichtung und die Schicht-7-Weiterleitungsvorrichtung separat mit der Steuerung kommunizieren und ein zum Übertragen eines Pakets genutzter Datenkanal zwischen der Schicht-4-Weiterleitungsvorrichtung und der Schicht-7-Weiterleitungsvorrichtung vorhanden ist; und das Verfahren Folgendes umfasst:
Empfangen (301, 501, 601, 801) eines durch die Steuerung gesendeten ersten Weiterleitungseintrags durch die Schicht-4-Weiterleitungsvorrichtung, wobei der erste Weiterleitungseintrag ein erstes Schlüsselwort und eine mit dem ersten Schlüsselwort korrespondierende erste Verarbeitungsrichtlinie umfasst, das erste Schlüsselwort Schicht-4-Informationen zum Abgleichen eines Pakets umfasst und der erste Weiterleitungseintrag genutzt wird, um die Schicht-4-Weiterleitungsvorrichtung zum Senden eines zweiten Pakets an die Schicht-7-Weiterleitungsvorrichtung gemäß der ersten Verarbeitungsrichtlinie anzuweisen, wenn ein zum ersten Schlüsselwort passendes erstes Paket empfangen wird;
Empfangen (302, 503, 603, 803) des ersten Pakets durch die Schicht-4-Weiterleitungsvorrichtung; und
Senden (303, 504, 604, 804) des zweiten Pakets durch die Schicht-4-Weiterleitungsvorrichtung an die Schicht-7-Weiterleitungsvorrichtung über den Datenkanal gemäß dem ersten Weiterleitungseintrag.

9. Verfahren nach Anspruch 8, das ferner Folgendes umfasst:
Empfangen eines durch die Steuerung gesendeten zweiten Weiterleitungseintrags durch die Schicht-4-Weiterleitungsvorrichtung, wobei der zweite Weiterleitungseintrag ein zweites Schlüsselwort und eine mit dem zweiten Schlüsselwort korrespondierende zweite Verarbeitungsrichtlinie umfasst, das zweite Schlüsselwort Schicht-4-Informationen zum Abgleichen eines Pakets umfasst und der zweite Weiterleitungseintrag genutzt wird, um die Schicht-4-Weiterleitungsvorrichtung, wenn ein zum zweiten Schlüsselwort passendes drittes Paket empfangen wird, zum Verarbeiten des dritten Pakets gemäß der zweiten Verarbeitungsrichtlinie und zum Auslassen des Sendens eines Pakets an die Schicht-7-Weiterleitungsvorrichtung anzuweisen.

10. Verfahren nach Anspruch 9, das nach dem Senden des zweiten Pakets durch die Schicht-4-Weiterleitungsvorrichtung an die Schicht-7-Weiterleitungsvorrichtung über den Datenkanal ferner Folgendes umfasst:
Empfangen eines durch die Steuerung gesendeten dritten Weiterleitungseintrags durch die Schicht-4-Weiterleitungsvorrichtung, wobei der dritte Weiterleitungseintrag das erste Schlüsselwort und eine mit dem ersten Schlüsselwort korrespondierende dritte Verarbeitungsrichtlinie umfasst und der dritte Weiterleitungseintrag genutzt wird, um die Schicht-4-Weiterleitungsvorrichtung, wenn ein zum ersten Schlüsselwort passendes viertes Paket empfangen wird, zum Verarbeiten des vierten Pakets gemäß der dritten Verarbeitungsrichtlinie und zum Auslassen des Sendens eines Pakets an die Schicht-7-Weiterleitungsvorrichtung anzuweisen.

11. Steuerung, die Folgendes umfasst:
eine Verarbeitungseinheit (1201), die konfiguriert ist zum Generieren eines ersten Weiterleitungseintrags, wobei der erste Weiterleitungseintrag ein erstes Schlüsselwort und eine mit dem ersten Schlüsselwort korrespondierende erste Verarbeitungsrichtlinie umfasst und das erste Schlüsselwort Schicht-4-Informationen zum Abgleichen eines Pakets umfasst; und
eine Kommunikationseinheit (1202), die konfiguriert ist zum Senden des ersten Weiterleitungseintrags an eine Schicht-4-Weiterleitungsvorrichtung, wobei der erste Weiterleitungseintrag genutzt wird, um die Schicht-4-Weiterleitungsvorrichtung zum Senden eines zweiten Pakets an die Schicht-7-Weiterleitungsvorrichtung gemäß der ersten Verarbeitungsrichtlinie anzuweisen, wenn ein zum ersten Schlüsselwort passendes erstes Paket empfangen wird, wobei
die Verarbeitungseinheit (1201) ferner konfiguriert ist zum Generieren einer Steuerungsregel, wobei die Steuerungsregel genutzt wird, um die Schicht-7-Weiterleitungsvorrichtung bei der Paketverarbeitung anzuweisen; und
die Kommunikationseinheit (1202) ferner konfiguriert ist zum Senden der Steuerungsregel an die Schicht-7-Weiterleitungsvorrichtung, damit die Schicht-7-Weiterleitungsvorrichtung das zweite Paket gemäß der Steuerungsregel verarbeitet.

12. Steuerung nach Anspruch 11, wobei
die Verarbeitungseinheit (1201) ferner konfiguriert ist zum Generieren eines zweiten Weiterleitungseintrags, wobei der zweite Weiterleitungseintrag ein zweites Schlüsselwort und eine mit dem zweiten Schlüsselwort korrespondierende zweite Verarbeitungsrichtlinie umfasst und das zweite Schlüsselwort Schicht-4-Informationen zum Abgleichen eines Pakets umfasst; und
die Kommunikationseinheit (1202) ferner konfiguriert ist zum Senden des zweiten Weiterleitungseintrags an die Schicht-4-Weiterleitungsvorrichtung, wobei der zweite Weiterleitungseintrag genutzt wird, um die Schicht-4-Weiterleitungsvorrichtung, wenn ein zum zweiten Schlüsselwort passendes drittes Paket empfangen wird, zum Verarbeiten des dritten Pakets gemäß der zweiten Verarbeitungsrichtlinie und zum Auslassen des Sendens eines Pakets an die Schicht-7-Weiterleitungsvorrichtung anzuweisen.

13. Steuerung nach Anspruch 11 oder 12, wobei
die Kommunikationseinheit (1202) ferner konfiguriert ist zum Empfangen eines durch die Schicht-7-Weiterleitungsvorrichtung gesendeten Paket-Parsing-Ergebnisses, wobei das Paket-Parsing-Ergebnis durch die Schicht-7-Weiterleitungsvorrichtung erhalten wird, indem das zweite Paket geparst wird; die Verarbeitungseinheit (1201) ferner konfiguriert ist zum Generieren eines dritten Weiterleitungseintrags gemäß dem Paket-Parsing-Ergebnis, wobei der dritte Weiterleitungseintrag das erste Schlüsselwort und eine mit dem ersten Schlüsselwort korrespondierende dritte Verarbeitungsrichtlinie umfasst; und
die Kommunikationseinheit (1202) ferner konfiguriert ist zum Senden des dritten Weiterleitungseintrags an die Schicht-4-Weiterleitungsvorrichtung, wobei der dritte Weiterleitungseintrag genutzt wird, um die Schicht-4-Weiterleitungsvorrichtung, wenn ein viertes zum ersten Schlüsselwort passendes Paket empfangen wird, zum Verarbeiten des vierten Pakets gemäß der dritten Verarbeitungsrichtlinie und zum Auslassen des Sendens eines Pakets an die Schicht-7-Weiterleitungsvorrichtung anzuweisen.

14. Schicht-4-Weiterleitungsvorrichtung, die Folgendes umfasst: eine Empfangseinheit (1401) und eine Übertragungseinheit (1402), wobei
die Empfangseinheit (1401) konfiguriert ist zum Empfangen eines durch eine Steuerung gesendeten ersten Weiterleitungseintrags, wobei der erste Weiterleitungseintrag ein erstes Schlüsselwort und eine mit dem ersten Schlüsselwort korrespondierende erste Verarbeitungsrichtlinie umfasst, das erste Schlüsselwort Schicht-4-Informationen zum Abgleichen eines Pakets umfasst und der erste Weiterleitungseintrag genutzt wird, um die Schicht-4-Weiterleitungsvorrichtung zum Senden eines zweiten Pakets an eine Schicht-7-Weiterleitungsvorrichtung gemäß der ersten Verarbeitungsrichtlinie anzuweisen, wenn ein zum ersten Schlüsselwort passendes erstes Paket empfangen wird;
die Empfangseinheit (1401) ferner konfiguriert ist zum Empfangen des ersten Pakets; und
die Übertragungseinheit (1401) konfiguriert ist zum Senden des zweiten Pakets an die Schicht-7-Weiterleitungsvorrichtung über einen Datenkanal gemäß dem ersten Weiterleitungseintrag, nachdem die Empfangseinheit (1401) das erste Paket empfangen hat.

15. Schicht-4-Weiterleitungsvorrichtung nach Anspruch 14, wobei
die Empfangseinheit (1401) ferner konfiguriert ist zum Empfangen eines durch die Steuerung gesendeten zweiten Weiterleitungseintrags, wobei der zweite Weiterleitungseintrag ein zweites Schlüsselwort und eine mit dem zweiten Schlüsselwort korrespondierende zweite Verarbeitungsrichtlinie umfasst, das zweite Schlüsselwort Schicht-4-Informationen zum Abgleichen eines Pakets umfasst und der zweite Weiterleitungseintrag genutzt wird, um die Schicht-4-Weiterleitungsvorrichtung, wenn ein zum zweiten Schlüsselwort passendes drittes Paket empfangen wird, zum Verarbeiten des dritten Pakets gemäß der zweiten Verarbeitungsrichtlinie und zum Auslassen des Sendens eines Pakets an die Schicht-7-Weiterleitungsvorrichtung anzuweisen.

## Revendications

1. Procédé de traitement de paquets, appliqué à un système comprenant un dispositif de transfert de couche 4, un dispositif de transfert de couche 7 et un contrôleur, dans lequel le dispositif de transfert de couche 4 et le dispositif de transfert de couche 7 communiquent séparément avec le contrôleur, et un canal de données utilisé pour transmettre un paquet existe entre le dispositif de transfert de couche 4 et le dispositif de transfert de couche 7 ; et le procédé comprend de :
envoyer (201, 501, 601, 801), par le contrôleur, une première entrée de transfert au dispositif de transfert de couche 4, dans lequel la première entrée de transfert comprend un premier mot-clé et une première politique de traitement correspondant au premier mot-clé, le premier mot-clé comprend des informations de couche 4 pour correspondre à un paquet, et la première entrée de transfert est utilisée pour donner l'ordre au dispositif de transfert de couche 4 d'envoyer un second paquet au dispositif de transfert de couche 7 selon la première politique de traitement, lorsqu'un premier paquet correspondant au premier mot-clé est reçu ; et
envoyer (202, 502, 602, 802), par le contrôleur, au dispositif de transfert de couche 7, une règle de commande utilisée pour donner un ordre au dispositif de transfert de couche 7 dans le traitement de paquets, de sorte que le dispositif de transfert de couche 7 traite le second paquet selon la règle de commande.

2. Procédé selon la revendication 1, comprenant en outre de :
envoyer, par le contrôleur, une seconde entrée de transfert au dispositif de transfert de couche 4, dans lequel la seconde entrée de transfert comprend un second mot-clé et une seconde politique de traitement correspondant au second mot-clé, le second mot-clé comprend des informations de couche 4 pour correspondre à un paquet, et la seconde entrée de transfert est utilisée pour donner l'ordre au dispositif de transfert de couche 4 de traiter, lorsqu'un troisième paquet correspondant au second mot-clé est reçu, le troisième paquet selon la seconde politique de traitement, et de ne pas procéder à l'envoi d'un paquet au dispositif de transfert de couche 7.

3. Procédé selon la revendication 1 ou 2, après l'envoi, par le contrôleur, d'une règle de commande au dispositif de transfert de couche 7, comprenant en outre de :
recevoir, par le contrôleur, un résultat d'analyse de paquet envoyé par le dispositif de transfert de couche 7, dans lequel le résultat d'analyse de paquet est obtenu par le dispositif de transfert de couche 7 par analyse du second paquet ; et
envoyer, par le contrôleur, une troisième entrée de transfert au dispositif de transfert de couche 4 selon le résultat d'analyse de paquet, dans lequel la troisième entrée de transfert comprend le premier mot-clé et une troisième politique de traitement correspondant au premier mot-clé, et la troisième entrée de transfert est utilisée pour donner l'ordre au dispositif de transfert de couche 4 de traiter, lorsqu'un quatrième paquet correspondant au premier mot-clé est reçu, le quatrième paquet selon la troisième politique de traitement, et de ne pas procéder à l'envoi d'un paquet au dispositif de transfert de couche 7.

4. Procédé selon la revendication 3, avant la réception, par le contrôleur, d'un résultat d'analyse de paquet envoyé par le dispositif de transfert de couche 7, comprenant en outre de :
envoyer, par le contrôleur, des informations de couche 7 de condition au dispositif de transfert de couche 7, dans lequel les informations de couche 7 de condition sont utilisées pour donner l'ordre au dispositif de transfert de couche 7 d'envoyer le résultat d'analyse de paquet lors de l'obtention des informations de couche 7 de condition en analysant le second paquet.

5. Procédé selon la revendication 3 ou 4, avant l'envoi, par le contrôleur, d'une troisième entrée de transfert au dispositif de transfert de couche 4, comprenant en outre de :
recevoir, par le contrôleur, un message envoyé par le dispositif de transfert de couche 7, dans lequel le message est utilisé pour donner l'ordre au contrôleur d'envoyer la troisième entrée de transfert au dispositif de transfert de couche 4.

6. Procédé selon l'une quelconque des revendications 1 à 5, dans lequel le procédé comprend en outre de :
recevoir, par le contrôleur, des informations de statistiques de service envoyées par le dispositif de transfert de couche 7 ; et
ajouter, par le contrôleur, un second dispositif de transfert de couche 7 selon les informations de statistiques de service, dans lequel un canal de données utilisé pour transmettre un paquet existe entre le second dispositif de transfert de couche 7 et le dispositif de transfert de couche 4.

7. Procédé selon la revendication 6, dans lequel l'addition, par le contrôleur, d'un second dispositif de transfert de couche 7 selon les informations de statistiques de service comprend de :
déterminer, par le contrôleur, selon les informations de statistiques de service, que le second dispositif de transfert de couche 7 doit être ajouté ; et
ajouter, par le contrôleur, le second dispositif de transfert de couche 7 au système, et envoyer une autre entrée de transfert au dispositif de transfert de couche 4, dans lequel l'une autre entrée de transfert comprend un mot-clé et une politique de traitement correspondant au mot-clé, et le mot-clé comprend des informations de couche 4 pour correspondre à un paquet, et l'une autre entrée de transfert est utilisée pour donner l'ordre au dispositif de transfert de couche 4 d'envoyer un autre paquet au second dispositif de transfert de couche 7 selon la politique de traitement lorsqu'un paquet correspondant au mot-clé est reçu.

8. Procédé de traitement de paquets appliqué à un système comprenant un dispositif de transfert de couche 4, un dispositif de transfert de couche 7, et un contrôleur, dans lequel le dispositif de transfert de couche 4 et le dispositif de transfert de couche 7 communiquent séparément avec le contrôleur, et un canal de données utilisé pour transmettre un paquet existe entre le dispositif de transfert de couche 4 et le dispositif de transfert de couche 7 ; et le procédé comprend de :
recevoir (301, 501, 601, 801), par le dispositif de transfert de couche 4, une première entrée de transfert envoyée par le contrôleur, dans lequel la première entrée de transfert comprend un premier mot-clé et une première politique de traitement correspondant au premier mot-clé, le premier mot-clé comprend des informations de couche 4 pour correspondre à un paquet, et la première entrée de transfert est utilisée pour donner l'ordre au dispositif de transfert de couche 4 d'envoyer un second paquet au dispositif de transfert de couche 7 selon la première politique de traitement lorsqu'un premier paquet correspondant au premier mot-clé est reçu ;
recevoir (302, 503, 603, 803), par le dispositif de transfert de couche 4, le premier paquet ; et
envoyer (303, 504, 604, 804), par le dispositif de transfert de couche 4, le second paquet au dispositif de transfert de couche 7 par l'intermédiaire du canal de données selon la première entrée de transfert.

9. Procédé selon la revendication 8, comprenant en outre de :
recevoir, par le dispositif de transfert de couche 4, une seconde entrée de transfert envoyée par le contrôleur, dans lequel la seconde entrée de transfert comprend un second mot-clé et une seconde politique de traitement correspondant au second mot-clé, le second mot-clé comprend des informations de couche 4 pour correspondre à un paquet, et la seconde entrée de transfert est utilisée pour donner l'ordre au dispositif de transfert de couche 4 de traiter, lorsqu'un troisième paquet correspondant au second mot-clé est reçu, le troisième paquet selon la seconde politique de traitement, et de ne pas procéder à l'envoi d'un paquet au dispositif de transfert de couche 7.

10. Procédé selon la revendication 9, après l'envoi, par le dispositif de transfert de couche 4, du second paquet au dispositif de transfert de couche 7 par l'intermédiaire du canal de données, comprenant en outre de :
recevoir, par le dispositif de transfert de couche 4, une troisième entrée de transfert envoyée par le contrôleur, dans lequel la troisième entrée de transfert comprend le premier mot-clé et une troisième politique de traitement correspondant au premier mot-clé, et la troisième entrée de transfert est utilisée pour donner l'ordre au dispositif de transfert de couche 4 de traiter, lorsqu'un quatrième paquet correspondant au premier mot-clé est reçu, le quatrième paquet selon la troisième politique de traitement, et de ne pas procéder à l'envoi d'un paquet au dispositif de transfert de couche 7.

11. Contrôleur, comprenant :
une unité de traitement (1201), configurée pour générer une première entrée de transfert, dans lequel la première entrée de transfert comprend un premier mot-clé et une première politique de traitement correspondant au premier mot-clé, et le premier mot-clé comprend des informations de couche 4 pour correspondre à un paquet ; et
une unité de communication (1202), configurée pour envoyer la première entrée de transfert à un dispositif de transfert de couche 4, dans lequel la première entrée de transfert est utilisée pour donner l'ordre au dispositif de transfert de couche 4 d'envoyer un second paquet au dispositif de transfert de couche 7 selon la première politique de traitement lorsqu'un premier paquet correspondant au premier mot-clé est reçu, dans lequel
l'unité de traitement (1201) est en outre configurée pour générer une règle de commande, dans lequel la règle de commande est utilisée pour donner un ordre au dispositif de transfert de couche 7 dans le traitement de paquets ; et
l'unité de communication (1202) est en outre configurée pour envoyer la règle de commande au dispositif de transfert de couche 7, de sorte que le dispositif de transfert de couche 7 traite le second paquet selon la règle de commande.

12. Contrôleur selon la revendication 11, dans lequel
l'unité de traitement (1201) est en outre configurée pour générer une seconde entrée de transfert, dans lequel la seconde entrée de transfert comprend un second mot-clé et une seconde politique de traitement correspondant au second mot-clé, et le second mot-clé comprend des informations de couche 4 pour correspondre à un paquet ; et l'unité de communication (1202) est en outre configurée pour envoyer la seconde entrée de transfert au dispositif de transfert de couche 4, dans lequel la seconde entrée de transfert est utilisée pour donner l'ordre au dispositif de transfert de couche 4 de traiter, lorsqu'un troisième paquet correspondant au second mot-clé est reçu, le troisième paquet selon la seconde politique de traitement, et de ne pas procéder à l'envoi d'un paquet au dispositif de transfert de couche 7.

13. Contrôleur selon la revendication 11 ou 12, dans lequel
l'unité de communication (1202) est en outre configurée pour recevoir un résultat d'analyse de paquet envoyé par le dispositif de transfert de couche 7, dans lequel le résultat d'analyse de paquet est obtenu par le dispositif de transfert de couche 7 par analyse du second paquet ;
l'unité de traitement (1201) est en outre configurée pour générer une troisième entrée de transfert en fonction du résultat d'analyse de paquet, dans lequel la troisième entrée de transfert comprend le premier mot-clé et une troisième politique de traitement correspondant au premier mot-clé ; et
l'unité de communication (1202) est en outre configurée pour envoyer la troisième entrée de transfert au dispositif de transfert de couche 4, dans lequel la troisième entrée de transfert est utilisée pour donner l'ordre au dispositif de transfert de couche 4 de traiter, lorsqu'un quatrième paquet correspondant au premier mot-clé est reçu, le quatrième paquet selon la troisième politique de traitement, et de ne pas procéder à l'envoi d'un paquet au dispositif de transfert de couche 7.

14. Dispositif de transfert de couche 4, comprenant : une unité de réception (1401) et une unité de transmission (1402), dans lequel
l'unité de réception (1401) est configurée pour recevoir une première entrée de transfert envoyée par un contrôleur, dans lequel la première entrée de transfert comprend un premier mot-clé et une première politique de traitement correspondant au premier mot-clé, le premier mot-clé comprend des informations de couche 4 pour correspondre à un paquet, et la première entrée de transfert est utilisée pour donner l'ordre au dispositif de transfert de couche 4 d'envoyer un second paquet à un dispositif de transfert de couche 7 selon la première politique de traitement lorsqu'un premier paquet correspondant au premier mot-clé est reçu ;
l'unité de réception (1401) est en outre configurée pour recevoir le premier paquet ; et l'unité de transmission (1401) est configurée pour envoyer le second paquet au dispositif de transfert de couche 7 par l'intermédiaire d'un canal de données selon la première entrée de transfert après réception par l'unité de réception (1401) du premier paquet.

15. Dispositif de transfert de couche 4 selon la revendication 14, dans lequel
l'unité de réception (1401) est en outre configurée pour recevoir une seconde entrée de transfert envoyée par le contrôleur, dans lequel la seconde entrée de transfert comprend un second mot-clé et une seconde politique de traitement correspondant au second mot-clé, le second mot-clé comprend des informations de couche 4 pour correspondre à un paquet, et la seconde entrée de transfert est utilisée pour donner l'ordre au dispositif de transfert de couche 4 de traiter, lorsqu'un troisième paquet correspondant au second mot-clé est reçu, le troisième paquet selon la seconde politique de traitement, et de ne pas procéder à l'envoi d'un paquet au dispositif de transfert de couche 7.
